# EUROPEAN PATENT APPLICATION

(11) **EP 3 569 669 A1**
(43) Date of publication of application: **20.11.2019**
(21) Application number: 18172158.0
(22) Date of filing: 14.05.2018
(51) Int. Cl.: C09J 7/38, B32B 27/00, C09J 5/08

(54) **METHOD OF MANUFACTURING AN ELECTRONIC CONTROL DEVICE**

(71) Applicant: 3M Innovative Properties Company, Saint Paul, MN 55133-3427 (US)
(72) Inventor: Torre, Claudia, 41453 Neuss (DE); Underhau, Kerstin, 41453 Neuss (DE); Kuester, Frank, 41453 Neuss (DE); Wieneke, Jan, 41453 Neuss (DE); Stricker, Andrea, 41453 Neuss (DE)
(74) Representative: Hettstedt, Stephan

(57) **Abstract**

The present disclosure to a method of manufacturing an electronic control device comprising a housing body comprising a first part and a second part, wherein the method comprises the steps of:
1) providing a housing body comprising a first part and a second part;
2) providing a multilayer pressure sensitive adhesive assembly comprising a first pressure sensitive adhesive polymeric layer having a first pressure sensitive adhesive composition adjacent to a second pressure sensitive adhesive polymeric foam layer having a second pressure sensitive adhesive composition; wherein the second pressure sensitive adhesive composition comprises:
a) a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof; and
b) optionally, a hollow non-porous particulate filler material;

3) adhering the first pressure sensitive adhesive polymeric layer to the first part; and
4) adhering the second part to the second pressure sensitive adhesive polymeric foam layer.

According to another aspect, the present disclosure is directed to a composite assembly comprising:
a) an electronic control device comprising a housing body comprising a first part and a second part as described in any of claims 1 to 12; and
b) a multilayer pressure sensitive adhesive assembly as described above, wherein the first pressure sensitive adhesive polymeric layer is adhered to the first part of the housing body, and the second pressure sensitive adhesive polymeric foam layer is adhered to the second part of the housing body.

According to still another aspect, the present disclosure relates to the use of a multilayer pressure sensitive adhesive assembly as described above for manufacturing an electronic control device.

## Description

### Technical Field

The present disclosure relates generally to the field of adhesives, more specifically to the field of pressure sensitive adhesive (PSA) compositions and multilayer assemblies for use in the manufacturing of electronic control devices. The present disclosure relates to a method of manufacturing an electronic control device. The present disclosure also relates to a composite assembly comprising an electronic control device comprising a housing body and a multilayer pressure sensitive adhesive assembly. The present disclosure is further directed to the use of a multilayer pressure sensitive adhesive assembly for manufacturing an electronic control device.

### Background

Electronic control devices are known in the art in various executions and are used in particular in automotive vehicles for controlling auxiliary electronic equipment. Because such electronic control devices are produced and sold in large quantities, there are continuous efforts towards achieving more cost-effective manufacturing processes. Known electronic control devices/units, typically comprise a housing body which is meant to protect and secure more sensitive electronic or mechanical components of the control device. The housing body generally comprises two parts which are typically secured by mechanical fastening means possibly with an additional liquid sealing silicone adhesive. Those fastening steps not only add complexity and additional costs to the manufacturing process, but also detrimentally affect the overall weight of the manufactured control unit. Exemplary electronic devices are described e.g. in US 2013/0225002-A1 (Golob et al.). Moreover, the constituting parts of the housing body are typically provided with uneven surfaces and critical topologies such as sharp corners, cavities or edges, which renders the fastening and sealing operation particularly challenging. Also, these constituting parts are generally provided with oily contamination before the manufacturing, which typically requires additional surface pre-cleaning steps.

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives. Pressure sensitive adhesives (PSAs) are well known to one of ordinary skill in the art to possess certain properties including the following: (1) aggressive and permanent tack, (2) adherence with no more than finger pressure, (3) sufficient ability to hold onto an adhered, and (4) sufficient cohesive strength.

When used in some specialized industrial applications, pressure sensitive adhesive tapes may be required to provide operability and acceptable performance at various challenging conditions, in particular exposure to substrate contaminations, such as oily contamination. Conventional pressure sensitive adhesive compositions are known to provide unsatisfactory adhesion performance on substrates contaminated with grease or oil.

Partial solutions are described e.g. in US Pat. No. 3,991,002 (Sadlo), US Pat. No. 5,759,679 (Kitamura et al.) and in US Pat. No. 5,360,855 (Gobran). The known solutions typically rely on unproductive and time-consuming substrate pre-cleaning steps, or on the use of priming compositions or complex and expensive polymeric systems, in particular synthetic rubber-based polymeric systems and compounds.

It is therefore a recognized and continuous challenge in the electronic control devices manufacturing industry to develop more cost-effective and improved manufacturing processes.

Without contesting the technical advantages associated with the solutions known in the art, there is still a need for cost-effective and improved processes for manufacturing electronic control devices.

Other advantages of the methods and pressure sensitive adhesive (PSA) assemblies of the disclosure will be apparent from the following description.

### Summary

According to one aspect, the present disclosure relates to a method of manufacturing an electronic control device comprising a housing body comprising a first part and a second part, wherein the method comprises the steps of:
1) providing a housing body comprising a first part and a second part;
2) providing a multilayer pressure sensitive adhesive assembly comprising a first pressure sensitive adhesive polymeric layer having a first pressure sensitive adhesive composition adjacent to a second pressure sensitive adhesive polymeric foam layer having a second pressure sensitive adhesive composition; wherein the second pressure sensitive adhesive composition comprises:
   a) a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof; and
   b) optionally, a hollow non-porous particulate filler material;
3) adhering the first pressure sensitive adhesive polymeric layer to the first part; and
4) adhering the second part to the second pressure sensitive adhesive polymeric foam layer.

According to another aspect, the present disclosure is directed to a composite assembly comprising:
a) an electronic control device comprising a housing body comprising a first part and a second part as described in any of claims 1 to 12; and
b) a multilayer pressure sensitive adhesive assembly as described above, wherein the first pressure sensitive adhesive polymeric layer is adhered to the first part of the housing body, and the second pressure sensitive adhesive polymeric foam layer is adhered to the second part of the housing body.

According to still another aspect, the present disclosure relates to the use of a multilayer pressure sensitive adhesive assembly as described above for manufacturing an electronic control device.

### Detailed description

According to a first aspect, the present disclosure relates to a method of manufacturing an electronic control device comprising a housing body comprising a first part and a second part, wherein the method comprises the steps of:
1) providing a housing body comprising a first part and a second part;
2) providing a multilayer pressure sensitive adhesive assembly comprising a first pressure sensitive adhesive polymeric layer having a first pressure sensitive adhesive composition adjacent to a second pressure sensitive adhesive polymeric foam layer having a second pressure sensitive adhesive composition; wherein the second pressure sensitive adhesive composition comprises:
   a) a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof; and
   b) optionally, a hollow non-porous particulate filler material;
3) adhering the first pressure sensitive adhesive polymeric layer to the first part; and
4) adhering the second part to the second pressure sensitive adhesive polymeric foam layer.

In the context of the present disclosure, it has surprisingly been found that a multilayer pressure sensitive adhesive assembly as described above, provides excellent and versatile adhesion characteristics when used for the manufacturing of electronic control devices. It has been, in particular, surprisingly found that the multilayer pressure sensitive adhesive assembly as described above, provides excellent bonding and sealing performance on difficult-to-bond substrates, in particular uneven surfaces provided with critical topologies such as sharp corners, cavities or edges, which are typically encountered in the housing body of electronic control devices.

It has further been discovered that, in some executions, the multilayer pressure sensitive adhesive assembly as described above provides excellent and versatile adhesion characteristics when used for adhesively bonding to an oily contaminated substrate. Surprisingly still, it has been found that this excellent balance of advantageous properties is substantially maintained even under high stress conditions such as e.g. exposure to intense and severe environmental conditions or under intensive usage. Advantageously, it has been found that, in some executions, the multilayer pressure sensitive adhesive assembly as described above keeps excellent oil-contamination tolerance even when exposed to challenging conditions such as wide temperature range, in particular extreme temperatures; humidity; corrosive chemicals and environment, such as aggressive solvents or automotive fuels. These demanding conditions are typically encountered in transportation and construction market applications, in particular in the vicinity of automotive engines or fuel tanks.

Besides the excellent adhesion characteristics to (oily contaminated) substrates, such as stainless steel and aluminum, and which are known to be substrates having a high surface energy (HSE), the multilayer pressure sensitive adhesive assemblies as described above also provide, in some executions, excellent adhesion and outstanding cohesion properties to various difficult-to-bond substrates, in particular, substrates having respectively a low (LSE) and a medium surface energy (MSE). This is particularly surprising finding as these various substrates typically exhibit completely different surface chemistry and energy. Such advantageous properties are particularly outstanding on difficult-to-bond substrates such as automotive clear coats, automotive critical paint systems or automotive finishing systems. The second pressure sensitive adhesive polymeric foam layer having a second pressure sensitive adhesive composition is also believed to advantageously contribute to providing excellent mechanical properties (in particular high stress relaxation, high internal strength and good conformability) to the multilayer pressure sensitive adhesive assemblies as described above, besides the outstanding adhesion performance on various types of substrates, including the challenging-to-bond LSE and MSE substrates, and the excellent adhesion characteristics to (oily contaminated) substrates believed to be mainly provided by the first pressure sensitive adhesive layer and composition.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, PC, PVC, PA, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

In the context of the present disclosure, the expression "high surface energy substrates" is meant to refer to those substrates having a surface energy of more than 350 dynes per centimeter, typically more than 400 dynes per centimeter, and more typically to those substrates having a surface energy comprised between 400 and 1100 dynes per centimeter. Included among such materials are metal substrates (e.g. aluminum, stainless steel), and glass.

The surface energy is typically determined from contact angle measurements as described, for example, in ASTM D7490-08.

The term superimposed, as used throughout the description, means that two or more layers of the liquid precursors of the polymers or of the polymer layers of the multilayer pressure sensitive adhesive assembly, are arranged on top of each other. Superimposed liquid precursor layers or polymer layers may be arranged directly next to each other so that the upper surface of the lower layer is abutting the lower surface of the upper layer.

The term adjacent, as used throughout the description, refers to two superimposed layers within the precursor multilayer pressure sensitive adhesive assembly or the cured multilayer pressure sensitive adhesive assembly which are arranged directly next to each other, i.e. which are abutting each other.

The terms "glass transition temperature" and "Tg" are used interchangeably and refer to the glass transition temperature of a (co)polymeric material or a mixture. Unless otherwise indicated, glass transition temperature values are estimated by the Fox equation, as detailed hereinafter.

In the context of the present disclosure, the expression "high Tg (meth)acrylate copolymer" is meant to designate a (meth)acrylate copolymer having a Tg of above 50°C.

In the context of the present disclosure, the expression "high Tg (meth)acrylic acid ester monomer units" is meant to designate (meth)acrylic acid ester monomer units having a Tg of above 50°C, as a function of the homopolymer of said high Tg monomers.

In the context of the present disclosure, the expression "low Tg (meth)acrylate copolymer" is meant to designate a (meth)acrylate copolymer having a Tg of below 20°C.

In the context of the present disclosure, the expression "low Tg (meth)acrylic acid ester monomer units" is meant to designate (meth)acrylic acid ester monomer units having a Tg of below 20°C, as a function of the homopolymer of said low Tg monomers.

Exemplary "wet-in-wet" production processes for use herein are described in details in e.g. WO-A1-2011094385 (Hitschmann et al.) or in EP-A1-0259094 (Zimmerman et al.), the full disclosures of which are herewith incorporated by reference.

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl and 2-propylheptyl.

In the context of the present disclosure, the expressions "uneven surface" and "irregular surface" are used interchangeably, and are typically meant to refer to a surface which is discontinuous and/or non-flat and/or non-horizontal. Throughout the present disclosure, the expression "uneven surface" is preferably intended to refer to a surface typically provided with at least one structure selected from the group consisting of cavities, holes, apertures, orifices, pits, openings, gaps, troughs, edges, depressions, elevations, and any combinations thereof.

Substrates, parts and surfaces for use herein are not particularly limited. Suitable substrates, parts and surfaces for use herein may be easily identified by those skilled in the art in the light of the present disclosure.

Exemplary substrates, parts and surfaces for use herein typically comprise a material selected from the group consisting of metals, in particular aluminum, steel, iron; glass; ceramic material; polymers, in particular polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); fiber-reinforced polymers; clear coat surfaces, in particular clear coats for vehicles like a car; and any combinations, mixtures or blends thereof.

According to one aspect of the disclosure, the substrates, parts and surfaces for use herein comprise a material selected from the group consisting of polymers, in particular polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); fiber-reinforced polymers; clear coat surfaces, in particular clear coats for vehicles like a car; and any combinations, mixtures or blends thereof.

According to an advantageous aspect, the substrates, parts and surfaces for use herein comprise a metal selected from the group consisting of aluminum, steel, iron, and any mixtures, combinations or alloys thereof. More advantageously, the substrates, parts and surfaces for use herein comprise a metal selected from the group consisting of aluminum, steel, stainless steel and any mixtures, combinations or alloys thereof.

In a particularly advantageous execution of the present disclosure, the substrates, parts and surfaces for use herein comprise aluminum.

According to a particular aspect of the disclosure, the substrates and parts for use herein comprise an uneven surface which is in particular selected from the group of curved surfaces, bended surfaces, twisted surfaces, angled surfaces, arched surfaces, arced surfaces, and any combinations thereof.

According another particular aspect of the disclosure, the substrates and parts for use herein comprise an uneven surface which is in particular provided with at least one structure selected from the group consisting of cavities, holes, apertures, orifices, pits, openings, gaps, troughs, edges, depressions, and any combinations thereof.

According to one particular aspect of the disclosure, the substrates, parts and surfaces for use herein comprise a surface which is at least partly oily contaminated. Types of oily contamination for use herein are not particularly limited. Suitable oily contamination for use herein may be easily identified by those skilled in the art in the light of the present disclosure.

Exemplary oily contamination for use herein include, but are not limited to, mineral oils, and synthetic oils. Typical mineral oils include paraffinic mineral oils, intermediate mineral oils and naphthenic mineral oils.

In an advantageous aspect of method according to the disclosure, the adhering step(s) are performed without using a pre-cleaning step of the substrates, parts and surfaces, and/or without using an adhesion promoter, in particular a priming composition or a tie layer.

According to an advantageous aspect of the method, the substrates and parts are comprised in an article selected from the group consisting of electronic control devices. Electronic control devices for use herein are not particularly limited. Suitable electronic control devices for use herein may be easily identified by those skilled in the art in the light of the present disclosure.

In an advantageous aspect, the electronic control device for use herein selected from the group consisting of electronic control units, in particular automotive vehicle electronic control units.

According to a more advantageous aspect, the electronic control device for use herein is an automotive vehicle electronic control unit selected from the group consisting of engine control units, powertrain control units, transmission control units, brake control units, central control units, central timing units, general electronic units, body control units, suspension control units, steering control units.

According to a particularly advantageous aspect, the electronic control device for use herein is an automotive vehicle electronic control unit selected from the group consisting of engine control units; brake control units, in particular anti-lock braking system (ABS) units, and steering control units, in particular electronic stability control program (ESP) units.

According to one exemplary of the present disclosure, the first pressure sensitive adhesive composition for use herein comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

In a typical aspect, the first pressure sensitive adhesive composition for use herein comprises a polymer base material selected from the group consisting of polyacrylates. Advantageously, the first pressure sensitive adhesive composition may comprise a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

In an advantageous aspect of the disclosure, the first pressure sensitive adhesive composition for use herein further comprises a tackifying resin, in particular a hydrocarbon tackifying resin, more in particular a hydrogenated hydrocarbon tackifying resin.

According to a particularly advantageous aspect of the present disclosure, the first pressure sensitive adhesive composition for use herein comprises:
a) 60 parts by weight or greater of a low Tg (meth)acrylate copolymer comprising:
   i. C₁-C₃₂ (meth)acrylic acid ester monomer units;
   ii. optionally, acid functional ethylenically unsaturated monomer units;
   iii. optionally, non-acid functional, ethylenically unsaturated polar monomer units;
   iv. optionally, vinyl monomer units; and
   v. optionally, multifunctional (meth)acrylate monomer units, and
b) up to 40 parts by weight of a high Tg (meth)acrylate copolymer having a weight average molecular weight (Mw) of above 20,000 Daltons, and comprising:
   i. high Tg (meth)acrylic acid ester monomer units;
   ii. optionally, acid functional ethylenically unsaturated monomer units;
   iii. optionally, low Tg (meth)acrylic acid ester monomer units;
   iv. optionally, non-acid functional, ethylenically unsaturated polar monomer units;
   v. optionally, vinyl monomer units;
   vi. optionally, a chlorinated polyolefinic (co)polymer; and
c) optionally, up to 20 parts by weight of a hydrocarbon tackifying resin, in particular a hydrogenated hydrocarbon tackifying resin, based on 100 parts by weight of copolymers a) and b).

In the context of the present disclosure, it has surprisingly been found that a multilayer pressure sensitive adhesive assembly as described above, in particular having a first pressure sensitive adhesive composition as described above, not only provides excellent bonding and sealing performance on difficult-to-bond substrates, in particular uneven surfaces provided with critical topologies such as sharp corners, cavities or edges, which are typically encountered in the housing body of electronic control devices, but also provides excellent and versatile adhesion characteristics when used for adhesively bonding to an oily contaminated substrate.

Surprisingly still, it has been found that this excellent balance of advantageous properties is substantially maintained even under high stress conditions such as e.g. exposure to intense and severe environmental conditions or under intensive usage. Advantageously, a multilayer pressure sensitive adhesive assembly as described above keeps excellent oil-contamination tolerance even when exposed to challenging conditions such as wide temperature range, in particular extreme temperatures; humidity; corrosive chemicals and environment, such as aggressive solvents or automotive fuels.

Without wishing to be bound by theory, it is believed that these very unique and advantageous properties, in particular the excellent oil-contamination tolerance property, are due to the specific combination of a low Tg (meth)acrylate copolymer and a high Tg (meth)acrylate copolymer as described above within the same first pressure sensitive adhesive composition, which is believed to provide advantageous polarity and wettability characteristics to the first pressure sensitive adhesive polymeric layer of the multilayer pressure sensitive adhesive assembly. Without wishing to be bound by theory still, it is believed that these advantageous properties, in particular the excellent oil-contamination tolerance property, are further due to a microphase separation morphology existing between the low-and high Tg (meth)acrylate copolymer components, wherein the low Tg (meth)acrylate copolymer is a continuous phase and the high Tg (meth)acrylate (co)polymer exists as relatively uniformly-shaped inclusions ranging in size from about 0.01 micrometer to about 0.1 micrometer, and wherein the microphase domains are separated by a diffuse boundary caused by the intermixing of the partially incompatible components at the interface of the first pressure sensitive adhesive polymeric layer of the multilayer pressure sensitive adhesive assembly.

According to the present disclosure, the first pressure sensitive adhesive composition for use herein comprises a low Tg (meth)acrylate copolymer comprising:
i. C₁-C₃₂ (meth)acrylic acid ester monomer units;
ii. optionally, acid functional ethylenically unsaturated monomer units;
iii. optionally, non-acid functional, ethylenically unsaturated polar monomer units;
iv. optionally, vinyl monomer units; and
v. optionally, multifunctional (meth)acrylate monomer units.

According to a particular aspect, the low Tg (meth)acrylate copolymer for use herein comprises C₁-C₂₄ (meth)acrylic acid ester monomer units, C₁-C₁₈ (meth)acrylic acid ester monomer units, or even C₄-C₁₂ (meth)acrylic acid ester monomer units.

According to a more particular aspect, the low Tg (meth)acrylate copolymer for use herein comprises monomeric (meth)acrylic acid esters of a non-tertiary alcohol, which alcohol contains from 1 to 32, from 1 to 24, from 1 to 18, or even from 4 to 12 carbon atoms. A mixture of such monomers may be used.

In a typical aspect, the low Tg (meth)acrylate copolymer for use herein, and which may be a solution copolymer or a syrup copolymer, has a Tg of below 20°C, or even below 0°C.

In another particular aspect, the low Tg (meth)acrylate copolymer for use herein comprises a solution copolymer comprising a low Tg solute copolymer in a solvent.

Examples of C₁-C₃₂ (meth)acrylic acid ester monomer units suitable for use in the low Tg (meth)acrylate copolymer include, but are not limited to, the esters of either acrylic acid or methacrylic acid with non-tertiary alcohols selected from the group consisting of ethanol, 1-propanol, 2-propanol, 1-butanol, 2-butanol, 1-pentanol, 2-pentanol, 3-pentanol, 2-methyl-l-butanol, 3-methyl-1-butanol, 1-hexanol, 2-hexanol, 2-methyl-1-pentanol, 3-methyl-1-pentanol, 2-ethyl-1-butanol, 3,5,5-trimethyl-1-hexanol, 3-heptanol, 1-octanol, 2-octanol, isooctylalcohol, 2-ethyl-1-hexanol, 1-decanol, 2-propylheptanol, 1-dodecanol, 1-tridecanol, 1-tetradecanol, citronellol, dihydrocitronellol, and any combinations of mixtures thereof.

Preferably, the C₁-C₃₂ (meth)acrylic acid ester monomer units suitable for use in the low Tg (meth)acrylate copolymer are selected from the group consisting of (meth)acrylic esters of 2-octanol, citronellol, dihydrocitronellol, and any combinations or mixtures thereof.

In some other aspects, the C₁-C₃₂ (meth)acrylic acid ester monomer units are esters of (meth)acrylic acid with 2-alkyl alkanols (Guerbet alcohols) as described in WO-A1-2011119363 (Lewandowski et al.), the content of which is incorporated herein by reference.

In some other aspects of the multilayer pressure sensitive adhesive assembly according to the disclosure, the C₁-C₃₂ (meth)acrylic acid ester monomer units, the C₁-C₂₄ (meth)acrylic acid ester monomer units, or even the C₁-C₁₈ (meth)acrylic acid ester monomer units of the low Tg (meth)acrylate copolymer comprise esters of (meth)acrylic acid with non-tertiary alcohols selected from the group consisting of 2-ethyl-1-hexanol, 2-propylheptanol, isooctylalcohol, and 2-octanol.

According to a beneficial aspect, the C₁-C₃₂ (meth)acrylic acid ester monomer units, the C₁-C₂₄ (meth)acrylic acid ester monomer units, or even the C₁-C₁₈ (meth)acrylic acid ester monomer units of the low Tg (meth)acrylate copolymer comprise esters of (meth)acrylic acid with non-tertiary alcohols selected from the group consisting of 2-ethyl-1-hexanol and 2-propylheptanol.

In some aspects, the C₁-C₃₂ (meth)acrylate acid ester monomer units for use herein is present in an amount of from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight, based on 100 parts total monomer content used to prepare the low Tg copolymer.

The low Tg (meth)acrylate copolymer for use herein may optionally further comprise acid functional ethylenically unsaturated monomer units, where the acid functional group may be an acid *per se*, such as a carboxylic acid, or a portion may be salt thereof, such as an alkali metal carboxylate. Useful acid functional ethylenically unsaturated monomer units include, but are not limited to, those selected from ethylenically unsaturated carboxylic acids, ethylenically unsaturated sulfonic acids, ethylenically unsaturated phosphonic acids, and mixtures thereof. Examples of such compounds include those selected from acrylic acid, methacrylic acid, itaconic acid, fumaric acid, crotonic acid, citraconic acid, maleic acid, oleic acid, β-carboxyethyl (meth)acrylate, 2-sulfoethyl methacrylate, styrene sulfonic acid, 2-acrylamido-2-methylpropanesulfonic acid, vinylphosphonic acid, and any combinations or mixtures thereof.

Due to their availability, acid functional ethylenically unsaturated monomer units of the low Tg (meth)acrylate copolymer are generally selected from ethylenically unsaturated carboxylic acids, i.e. (meth)acrylic acids. When even stronger acids are desired, acidic monomers include the ethylenically unsaturated sulfonic acids and ethylenically unsaturated phosphonic acids. The acid functional ethylenically unsaturated monomer unit is generally used in amounts of 0.5 to 15 parts by weight, 1 to 15 parts by weight, or even 1 to 5 parts by weight, based on 100 parts by weight total monomer of the low Tg (meth)acrylate copolymer. In some other aspects, the acid functional ethylenically unsaturated monomer unit is used in amounts of 0.5 to 15 parts by weight, 0.5 to 10 parts by weight, 0.5 to 5 parts by weight, 0.5 to 3 parts by weight, or even 0.5 to 2 parts by weight, based on 100 parts by weight total monomer of the low Tg (meth)acrylate copolymer.

The low Tg (meth)acrylate copolymer for use herein may optionally further comprise non-acid functional, ethylenically unsaturated monomer units, in particular non-acid functional, ethylenically unsaturated polar monomer units.

The non-acid functional, ethylenically unsaturated polar monomer units useful in preparing the low Tg (meth)acrylate copolymer are both somewhat oil soluble and water soluble, resulting in a distribution of the polar monomer between the aqueous and oil phases in an emulsion polymerization. As used herein, the term "polar monomers" are exclusive of acid functional monomers.

Representative examples of suitable non-acid functional, ethylenically unsaturated polar monomer units include, but are not limited to, 2-hydroxyethyl (meth)acrylate; N-vinylpyrrolidone; N-vinylcaprolactam; acrylamides; mono- or di-N-alkyl substituted acrylamide; t-butyl acrylamide; dimethylaminoethyl acrylamide; N-octyl acrylamide; poly(alkoxyalkyl) (meth)acrylates including 2-(2-ethoxyethoxy)ethyl (meth)acrylate, 2-ethoxyethyl (meth)acrylate, 2-methoxyethoxyethyl (meth)acrylate, 2-methoxyethyl methacrylate, polyethylene glycol mono(meth)acrylates; alkyl vinyl ethers, including vinyl methyl ether; and mixtures thereof. Preferred non-acid functional, ethylenically unsaturated polar monomer units include those selected from the group consisting of 2-hydroxyethyl (meth)acrylate and N-vinylpyrrolidinone. The non-acid functional, ethylenically unsaturated polar monomer unit may be present in amounts of from 0 to 20 parts by weight, based on 100 parts by weight total monomer of the low Tg (meth)acrylate copolymer.

In a particular aspect, the non-acid functional, ethylenically unsaturated polar monomer units for use herein are selected from the group consisting of 2-hydroxyethyl (meth)acrylate, N-vinylpyrrolidone, N-vinylcaprolactam, acrylamides, poly(alkoxyalkyl) (meth)acrylates, alkyl vinyl ethers, and any mixtures thereof.

The low Tg (meth)acrylate copolymer for use herein may optionally further comprise vinyl monomer units. Vinyl monomer units useful in preparing the low Tg (meth)acrylate copolymer, include vinyl esters (e.g., vinyl acetate and vinyl propionate), styrene, substituted styrene (e.g., α-methyl styrene), vinyl halide, and mixtures thereof. As used herein vinyl monomer units are exclusive of acid functional monomers, acrylate ester monomers and polar monomers. Such vinyl monomer units are generally used at 0 to 5 parts by weight, or even 1 to 5 parts by weight, based on 100 parts by weight total monomer of the low Tg (meth)acrylate copolymer.

In a beneficial aspect, the vinyl monomer units for use herein are selected from the group consisting of vinyl esters, styrene, substituted styrene, vinyl halide, and any mixtures thereof.

In order to increase cohesive strength of the coated first pressure sensitive adhesive polymeric layer, the low Tg (meth)acrylate copolymer for use herein may optionally further comprise multifunctional (meth)acrylate monomer units. Multifunctional acrylate monomer units are particularly useful for emulsion or syrup polymerization. Examples of useful multifunctional (meth)acrylate monomer units include, but are not limited to, di(meth)acrylates, tri(meth)acrylates, and tetra(meth)acrylates, such as 1,6-hexanediol di(meth)acrylate, poly(ethylene glycol) di(meth)acrylates, polybutadiene di(meth)acrylate, polyurethane di(meth)acrylates, and propoxylated glycerin tri(meth)acrylate, and mixtures thereof. The amount and identity of the particular multifunctional (meth)acrylate monomer unit is tailored depending upon application of the adhesive composition.

Typically, the multifunctional (meth)acrylate monomer unit is present in amounts less than 5 parts based on total dry weight of adhesive composition. More specifically, the multifunctional (meth)acrylate monomer unit (crosslinker) may be present in amounts from 0.01 to 5 parts, or even 0.05 to 1 parts, based on 100 parts total monomers of the low Tg (meth)acrylate copolymer.

According to an advantageous aspect of the multilayer pressure sensitive adhesive assembly according to the disclosure, the low Tg (meth)acrylate copolymer comprises:
i. from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight of C₁-C₃₂ (meth)acrylic acid ester monomer units, C₁-C₂₄ (meth)acrylic acid ester monomer units, or even C₁-C₁₈ (meth)acrylic acid ester monomer units;
ii. from 0.1 to 15 parts by weight, from 0.2 to 15 parts by weight, from 0.2 to 12 parts by weight, from 0.5 to 12 parts by weight, from 0.8 to 12 parts by weight, from 1.0 to 12 parts by weight, from 1.5 to 12 parts by weight, from 1.8 to 12 parts by weight, from 2.0 to 12 parts by weight, from 2.2 to 12 parts by weight, from 2.5 to 12 parts by weight, from 2.5 to 11 parts by weight, from 2.5 to 10 parts by weight, from 2.5 to 10 parts by weight, or even from 2.5 to 8 parts by weight of C₂-C₈ hydroxyalkyl (meth)acrylic acid ester monomer units,
iii. from 0.5 to 15 parts by weight of acid-functional ethylenically unsaturated monomer units;
iv. from 0 to 20 parts by weight of further non-acid functional, ethylenically unsaturated polar monomer units;
v. from 0 to 5 parts vinyl monomer units; and
vi. from 0 to 5 parts of multifunctional (meth)acrylate monomer units;
based on 100 parts by weight of the total monomers of the low Tg copolymer.

According to another advantageous aspect of the multilayer pressure sensitive adhesive assembly according to the disclosure, the low Tg (meth)acrylate copolymer comprises:
i. from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight of (meth)acrylic acid ester monomer units of non-tertiary C₁-C₃₂ alcohols, non-tertiary C₁-C₂₄ alcohols, or even non-tertiary C₁-C₁₈ alcohols;
ii. from 0.1 to 15 parts by weight, from 0.2 to 15 parts by weight, from 0.2 to 12 parts by weight, from 0.5 to 12 parts by weight, from 0.8 to 12 parts by weight, from 1.0 to 12 parts by weight, from 1.5 to 12 parts by weight, from 1.8 to 12 parts by weight, from 2.0 to 12 parts by weight, from 2.2 to 12 parts by weight, from 2.5 to 12 parts by weight, from 2.5 to 11 parts by weight, from 2.5 to 10 parts by weight, from 2.5 to 10 parts by weight, or even from 2.5 to 8 parts by weight of C₂-C₈ hydroxyalkyl (meth)acrylic acid ester monomer units,
iii. from 0.5 to 15 parts by weight of acid-functional ethylenically unsaturated monomer units;
iv. from 0 to 20 parts by weight of further non-acid functional, ethylenically unsaturated polar monomer units;
v. from 0 to 5 parts vinyl monomer units; and
vi. from 0 to 5 parts of multifunctional (meth)acrylate monomer units;
based on 100 parts by weight of the total monomers of the low Tg copolymer.

In some aspects, the low Tg copolymers may contain high Tg (meth)acrylic acid ester monomer units having glass transition temperatures of above 50°C, as a function of the homopolymer of said high Tg (meth)acrylic acid ester monomer units. The incorporation of small amounts of high Tg (meth)acrylic acid ester monomer units in the low Tg (meth)acrylate copolymer component improves the compatibility and stabilize the microphase morphology between the low-and high Tg (meth)acrylate copolymer components, particularly when the high Tg (meth)acrylic acid ester monomer unit is common to both (meth)acrylate copolymer components.

Suitable high Tg monomer units are (meth)acrylate acid esters and are described in more detail below. The low Tg (meth)acrylate copolymer may contain amounts of copolymerized high Tg (meth)acrylic acid ester monomer units such that the Tg of the (meth)acrylate copolymer is of below 20°C, preferably below 0°C, as estimated by the Fox Equation. Generally, the copolymer may contain from 1 to 20 parts by weight, or from 1 to 10 parts by weight in the low Tg (meth)acrylate copolymer based on 100 parts by weight total monomers of the low Tg (meth)acrylate copolymer. The high Tg (meth)acrylic acid ester monomer units of the low Tg (meth)acrylate copolymer may be incorporated in any manner. They may be part of the monomer mixture used in the preparation, whether by syrup, solvent or neat polymerization.

The low Tg (meth)acrylate copolymer may be prepared by any conventional free radical polymerization method, including solution, radiation, bulk, dispersion, emulsion, solventless, and suspension processes. The resulting adhesive (co)polymers may be random or block (co)polymers. Preferably, the low Tg (meth)acrylate copolymer component is generally prepared as either a solution or syrup copolymer composition.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100°C until the reaction is completed, typically in about 1 to 24 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. Those solvents can be used alone or as mixtures thereof.

A syrup polymer technique comprises partially polymerizing monomers to produce a syrup polymer comprising the low Tg (meth)acrylate copolymer and unpolymerized monomers. The syrup polymer composition is polymerized to a useful coating viscosity, which may be coated onto a substrate (such as a tape backing) and further polymerized. Partial polymerization provides a coatable solution of the acid functional (meth)acrylate solute copolymer in one or more solvent monomers. When high Tg (meth)acrylic acid ester monomer units are included, the initial monomer mixture may include the high Tg (meth)acrylic acid ester monomer units, and/or the high Tg (meth)acrylic acid ester monomer units may be added to the syrup polymer composition. In such aspects, the monomer mixture may be combined and partially polymerized to a suitable viscosity, then addition high Tg (meth)acrylic acid ester monomer units added.

The polymerizations may be conducted in the presence of, or preferably in the absence of, suitable solvents such as ethyl acetate, toluene and tetrahydrofuran which are unreactive with the functional groups of the components of the syrup polymer.

Polymerization can be accomplished by exposing the syrup polymer composition to energy in the presence of a photoinitiator. Energy activated initiators may be unnecessary where, for example, ionizing radiation is used to initiate polymerization. These photoinitiators can be employed in concentrations ranging from about 0.0001 to about 3. 0 pbw, preferably from about 0.0001 to about 1.0 pbw, and more preferably from about 0.005 to about 0.5 pbw, per 100 pbw of the total monomer of the low Tg (meth)acrylate syrup copolymer.

A preferred method of preparation of the coatable syrup polymer is photoinitiated free radical polymerization. Advantages of the photopolymerization method are that 1) heating the monomer solution is unnecessary and 2) photoinitiation is stopped completely when the activating light source is turned off. Polymerization to achieve a coatable viscosity may be conducted such that the conversion of monomers to polymer is up to about 30%. Polymerization can be terminated when the desired conversion and viscosity have been achieved by removing the light source and by bubbling air (oxygen) into the solution to quench propagating free radicals.

The solute (co)polymer(s) may be prepared conventionally in a non-monomeric solvent and advanced to high conversion (degree of polymerization). When solvent (monomeric or non-monomeric) is used, the solvent may be removed (for example by vacuum distillation) either before or after formation of the syrup polymer. While an acceptable method, this procedure involving a highly converted functional polymer is not preferred because an additional solvent removal step is required, another material may be required (the non-monomeric solvent), and dissolution of the high molecular weight, highly converted solute polymer in the monomer mixture may require a significant period of time.

Useful photoinitiators include benzoin ethers such as benzoin methyl ether and benzoin isopropyl ether; substituted acetophenones such as 2, 2-dimethoxyacetophenone, available as Irgacure™ 651 photoinitiator (BASF, Ludwigshafen, Germany), 2,2 dimethoxy-2-phenyl-1-phenylethanone, available as Esacure™ KB-1 photoinitiator (Sartomer Co.; West Chester, PA), and dimethoxyhydroxyacetophenone; substituted α-ketols such as 2- methyl-2-hydroxy propiophenone; aromatic sulfonyl chlorides such as 2-naphthalene-sulfonyl chloride; and photoactive oximes such as 1-phenyl-1,2-propanedione-2-(O-ethoxy-carbonyl)oxime. Particularly preferred among these are the substituted acetophenones.

Preferred photoinitiators are photoactive compounds that undergo a Norrish I cleavage to generate free radicals that can initiate by addition to the acrylic double bonds. Additional photoinitiator can be added to the mixture to be coated after the copolymer has been formed, i.e., photoinitiator can be added to the syrup polymer mixture.

The syrup polymer composition and the photoinitiator may be irradiated with activating UV radiation to polymerize the monomer component(s). UV light sources can be of two types: 1) relatively low light intensity sources such as backlights which provide generally 10 mW/cm² or less (as measured in accordance with procedures approved by the United States National Institute of Standards and Technology as, for example, with a Uvimap^{tm} UM 365 L-S radiometer manufactured by Electronic Instrumentation & Technology, Inc., in Sterling, VA) over a wavelength range of 280 to 400 nanometers and 2) relatively high light intensity sources such as medium pressure mercury lamps which provide intensities generally greater than 10 mW/cm², preferably between 15 and 450 mW/cm². For example, an intensity of 600 mW/cm² and an exposure time of about 1 second may be used successfully. Intensities can range from about 0.1 to about 150 mW/cm², preferably from about 0. 5 to about 100 mW/cm², and more preferably from about 0. 5 to about 50 mW/cm². Such photoinitiators preferably are present in an amount of from 0.1 to 1.0 pbw per 100 pbw of the syrup polymer composition.

The degree of conversion (of monomers to copolymer) can be monitored during the irradiation by measuring the index of refraction of the polymerizing. Useful coating viscosities are achieved with conversions (i.e. the percentage of available monomer polymerized) in the range of up to 30%, preferably 2-20%, more preferably from 5-15%, and most preferably from 7-12%. The molecular weight (weight average) of the solute polymer(s) is at least 100,000, preferably at least 250,000, more preferably at least 500,000.

It will be understood that a syrup polymerization method will produce a "dead polymer" in the initial free radical polymerization; i.e. a fully polymerized, not free-radically polymerizable polymer. Subsequently the solvent monomers do not free-radically polymerize onto the extant solute copolymer. Upon compounding the syrup polymer, further exposure to UV initiates free radical polymerization of the solvent monomers to produce a distinct copolymer. The syrup method provides advantages over solvent or solution polymerization methods; the syrup method yielding higher molecular weights. These higher molecular weights increase the amount of chain entanglements, thus increasing cohesive strength. Also, the distance between cross-links can be greater with high molecular syrup polymer, which allows for increased wet-out onto a surface.

According to the present disclosure, the first pressure sensitive adhesive composition for use herein comprises a high Tg (meth)acrylate copolymer having a weight average molecular weight (Mw) of above 20,000 Daltons, and comprising:
i. high Tg (meth)acrylic acid ester monomer units;
ii. optionally, acid functional ethylenically unsaturated monomer units;
iii. optionally, low Tg (meth)acrylic acid ester monomer units;
iv. optionally, non-acid functional, ethylenically unsaturated polar monomer units;
v. optionally, vinyl monomer units; and
vi. optionally, a chlorinated polyolefinic (co)polymer.

In a typical aspect, the high Tg (meth)acrylate copolymer for use herein, has a Tg of above 50°C, above 75°C, or even above 100°C, as estimated by the Fox equation.

According to a particular aspect, the high Tg (meth)acrylate copolymer for use herein has a weight average molecular weight (Mw) of above 25,000 Daltons, above 30,000 Daltons, above 35,000 Daltons, or even above 40,000 Daltons.

In another aspect, the high Tg (meth)acrylate copolymer for use herein has a weight average molecular weight (Mw) of below 100,000 Daltons, below 80,000 Daltons, below 75,000 Daltons, below 60,000 Daltons, below 50,000 Daltons, or even below 45,000 Daltons.

The high Tg (meth)acrylate copolymer may comprise 100 parts by weight of the high Tg monomer(s). In other aspects, the high Tg (meth)acrylate copolymer may comprise the additional monomer units, as described hereinbefore for the low Tg (meth)acrylate copolymer (supra), each in amounts such that the Tg of the resulting copolymer is above 50°C, above 75°C, or even above 100°C, as estimated by the Fox equation.

According to a beneficial aspect of the multilayer pressure sensitive adhesive assembly according to the disclosure, the high Tg (meth)acrylate copolymer comprises:
i. up to 100 parts by weight of high Tg (meth)acrylic acid ester monomer units;
ii. from 0 to 15, or even from 1 to 5 parts by weight of acid functional ethylenically unsaturated monomer units;
iii. from 0 to 50, or even from 1 to 25 parts by weight of optional low Tg (meth)acrylic acid ester monomer units;
iv. from 0 to 10, or even from 1 to 5 parts by weight of optional further non-acid functional, ethylenically unsaturated polar monomer units; and
v. from 0 to 5, or even from 1 to 5 parts by weight of optional vinyl monomer units;
based on 100 parts by weight of the total monomers of the high Tg (meth)acrylate copolymer.

Suitable high Tg (meth)acrylic acid ester monomer units for use herein may be advantageously selected from the group consisting of t-butyl (meth)acrylate, methyl (meth)acrylate, ethyl (meth)acrylate, isopropyl (meth)acrylate, n-butyl (meth)acrylate, isobutyl (meth)acrylate, s-butyl (meth)acrylate, t-butyl (meth)acrylate, stearyl (meth)acrylate, phenyl (meth)acrylate, cyclohexyl (meth)acrylate, isobornyl (meth)acrylate, isobornyl (meth)acrylate, benzyl (meth)acrylate, 3,3,5 trimethylcyclohexyl (meth)acrylate, cyclohexyl (meth)acrylate, N-octyl acrylamide, propyl (meth)acrylate, and any combinations or mixtures thereof.

Suitable low Tg (meth)acrylic acid ester monomer units for use herein include those having one ethylenically unsaturated group and a glass transition temperature of less than 0°C (as a function of the homopolymer). Exemplary low Tg (meth)acrylic acid ester monomer units for use herein include, but are not limited to, n-butyl acrylate, isobutyl acrylate, hexyl acrylate, 2-ethyl-hexylacrylate, isooctylacrylate, caprolactoneacrylate, isodecylacrylate, tridecylacrylate, laurylmethacrylate, methoxy-polyethylenglycol-monomethacrylate, laurylacrylate, tetrahydrofurfuryl-acrylate, ethoxy-ethoxyethyl acrylate and ethoxylated-nonylacrylate. Especially preferred are 2-ethyl-hexylacrylate, ethoxy-ethoxyethyl acrylate, tridecylacrylate and ethoxylated nonylacrylate. Other monomers may be used as described for the low Tg copolymer (*supra*).

The high Tg (meth)acrylate (co)polymer herein may be prepared by any conventional free radical polymerization method, including solution, radiation, bulk, dispersion, emulsion, and suspension processes. The resulting adhesive (co)polymers may be random or block (co)polymers.

The adhesive copolymers may be prepared via suspension polymerizations as disclosed in U.S. 3,691,140 (Silver); 4,166,152 (Baker et al.); 4,636,432 (Shibano et al); 4,656,218 (Kinoshita); and 5,045,569 (Delgado).

Polymerization via emulsion techniques may require the presence of an emulsifier (which may also be called an emulsifying agent or a surfactant). Useful emulsifiers for the present disclosure include those selected from the group consisting of anionic surfactants, cationic surfactants, nonionic surfactants, and mixtures thereof. Preferably, an emulsion polymerization is carried out in the presence of anionic surfactant(s). A useful range of surfactant concentration is from about 0.5 to about 8 weight percent, preferably from about 1 to about 5 weight percent, based on the total weight of all monomers of the emulsion pressure-sensitive adhesive.

Alternatively, the copolymers can be polymerized by techniques including, but not limited to, the conventional techniques of solvent polymerization, dispersion polymerization, and solventless bulk polymerization. The monomer mixture may comprise a polymerization initiator, especially a thermal initiator or a photoinitiator of a type and in an amount effective to polymerize the comonomers.

A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100°C until the reaction is completed, typically in about 1 to 20 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. Those solvents can be used alone or as mixtures thereof.

In a typical photopolymerization method, a monomer mixture may be irradiated with ultraviolet (UV) rays in the presence of a photopolymerization initiator (i.e., photoinitiators). Preferred photoinitiators are those available under the trade designations IRGACURE™ and DAROCUR™ from BASF and include 1-hydroxy cyclohexyl phenyl ketone (IRGACURE™ 184), 2,2-dimethoxy-1,2-diphenylethan-1-one (IRGACURE 651), *bis*(2,4,6-trimethylbenzoyl)phenylphosphineoxide (IRGACURE™ 819), 1-[4-(2-hydroxyethoxy)phenyl]-2-hydroxy-2-methyl-1-propane-1-one (IRGACURE™ 2959), 2-benzyl-2-dimethylamino-1-(4-morpholinophenyl)butanone (IRGACURE™ 369), 2-methyl-1-[4-(methylthio)phenyl]-2-morpholinopropan-1-one (IRGACURE™ 907), and 2-hydroxy-2-methyl-1-phenyl propan-1-one (DAROCUR™ 1173). Particularly preferred photoinitiators are IRGACURE™ 819, 651, 184 and 2959.

Solventless polymerization methods, such as the continuous free radical polymerization method described in U.S. Pat. Nos. 4,619,979 and 4,843,134 (Kotnour et al.); the essentially adiabatic polymerization methods using a batch reactor described in U.S. Pat. No. 5,637,646 (Ellis); and, the methods described for polymerizing packaged pre-adhesive compositions described in U.S. Pat. No. 5,804,610 (Hamer et al.) may also be utilized to prepare the polymers.

Water-soluble and oil-soluble initiators useful in preparing the high Tg (co)polymers used in the present disclosure are initiators that, on exposure to heat, generate free-radicals which initiate (co)polymerization of the monomer mixture. Water-soluble initiators are preferred for preparing the (meth)acrylate polymers by emulsion polymerization. Suitable water-soluble initiators include but are not limited to those selected from the group consisting of potassium persulfate, ammonium persulfate, sodium persulfate, and mixtures thereof; oxidation-reduction initiators such as the reaction product of the above-mentioned persulfates and reducing agents such as those selected from the group consisting of sodium metabisulfite and sodium bisulfite; and 4,4'-azobis(4-cyanopentanoic acid) and its soluble salts (e.g., sodium, potassium). The preferred water-soluble initiator is potassium persulfate. Suitable oil-soluble initiators include but are not limited to those selected from the group consisting of azo compounds such as VAZO™ 64 (2,2'-azobis(isobutyronitrile)) and VAZO™ 52 (2,2'-azobis(2,4-dimethylpentanenitrile)), both available from E.I. du Pont de Nemours Co., peroxides such as benzoyl peroxide and lauroyl peroxide, and mixtures thereof. The preferred oil-soluble thermal initiator is (2,2'-azobis(isobutyronitrile)). When used, initiators may comprise from about 0.05 to about 1 part by weight, or from about 0.1 to about 0.5 part by weight based on 100 parts by weight of monomer components in the first pressure-sensitive adhesive.

For both of the high and low Tg (meth)acrylate copolymers, a useful predictor of interpolymer Tg for specific combinations of various monomers can be computed by application of Fox Equation: 1/Tg = ∑Wi/Tgi. In this equation, Tg is the glass transition temperature of the mixture, Wi is the weight fraction of component i in the mixture, and Tgi is the glass transition temperature of component i, and all glass transition temperatures are in Kelvin (K). As used herein the term "high Tg monomer" refers to a monomer, which when homopolymerized, produce a (meth)acryloyl polymer having a Tg of above 50°C. The incorporation of the high Tg monomer to the high Tg (meth)acrylate copolymer is sufficient to raise the glass transition temperature of the resulting (meth)acrylate copolymer to above 50°C, above 75°C, or even above 100°C, as calculated using the Fox Equation.

If desired, a chain transfer agent may be added to the monomer mixture of either of the low- or high Tg (co)polymers to produce a (co)polymer having the desired molecular weight. A chain transfer is preferably used in the preparation of the high Tg (co)polymer. It has been observed that when the molecular weight of the high Tg (co)polymer is less than 20k, the peel performance at elevated temperatures is reduced. Further, when the M_{w} is greater than about 100k, the immiscibility of the components is such that the tack of the composition is reduced.

Examples of useful chain transfer agents include but are not limited to those selected from the group consisting of carbon tetrabromide, alcohols, mercaptans, and mixtures thereof. When present, the preferred chain transfer agents are isooctylthioglycolate and carbon tetrabromide. The chain transfer agent may be used in amounts such that the high Tg (co)polymer has a M_{w} of greater than 20k, and preferable less than 100 k. The monomer mixture may further comprise up to about 5 parts by weight of a chain transfer agent, typically about 0.01 to about 5 parts by weight, if used, preferably about 0.5 parts by weight to about 3 parts by weight, based upon 100 parts by weight of the total monomer mixture.

In order to increase cohesive strength of the first pressure sensitive adhesive composition, a crosslinking additive may be added to the adhesive composition - the combination of the high- and low Tg (co)polymers. Two main types of crosslinking additives are exemplary. The first crosslinking additive is a thermal crosslinking additive such as multifunctional aziridine, isocyanate and epoxy. One example of aziridine crosslinker is 1,1'-isophthaloyl-bis(2-methylaziridine (CAS No. 7652-64-4). Such chemical crosslinkers can be added into PSAs after polymerization and activated by heat during oven drying of the coated adhesive. Although polyfunctional (meth)acrylates may be included in the low Tg copolymer component and may function as crosslinking agents, additional crosslinking agents may be added. In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, and DE 10 2008 059 050 A, the relevant contents of which are herewith incorporated by reference. Suitable accelerant and retardant systems for use herein are described e.g. in the description of US-A1- 2011/0281964, the relevant content of which is herewith explicitly incorporated by reference. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500.

In another embodiment, chemical crosslinkers, which rely upon free radicals to carry out the crosslinking reaction, may be employed. Reagents such as, for example, peroxides serve as a source of free radicals. When heated sufficiently, these precursors will generate free radicals that bring about a crosslinking reaction of the polymer. A common free radical generating reagent is benzoyl peroxide. Free radical generators are required only in small quantities, but generally require higher temperatures to complete a crosslinking reaction than those required for the bisamide and isocyanate reagents.

The second type of crosslinking additive is a photosensitive crosslinker, which is activated by high intensity ultraviolet (UV) light. Two common photosensitive crosslinkers used for acrylic PSAs are benzophenone and copolymerizable aromatic ketone monomers as described in U.S. Patent No. 4,737,559 (Kellen et al.). Another photocrosslinker, which can be post-added to the solution or syrup copolymer and activated by UV light is a triazine, for example, 2,4-bis(trichloromethyl)-6-(4-methoxy-phenyl)-s-triazine. In some embodiments, multifunctional acrylates may be used to increase the cohesive strength. Multi-functional acrylates are particularly useful for emulsion polymerization. Examples of useful multi-functional acrylate crosslinking agents include, but are not limited to, diacrylates, triacrylates, and tetraacrylates, such as 1,6-hexanediol diacrylate, poly(ethylene glycol) diacrylates, polybutadiene diacrylate, polyurethane diacrylates, and propoxylated glycerin triacrylate, and mixtures thereof.

Hydrolyzable, free-radically copolymerizable crosslinkers, such as monoethylenically unsaturated mono-, di-, and trialkoxy silane compounds including, but not limited to, methacryloxypropyltrimethoxysilane (available from Gelest, Inc., Tullytown, PA), vinyl dimethylethoxysilane, vinyl methyl diethoxysilane, vinyltriethoxysilane, vinyltrimethoxysilane, vinyltriphenoxysilane, and the like, are also useful crosslinking agents.

The amount and identity of the crosslinking agent is tailored depending upon application of the adhesive composition. If present, a crosslinker can be used in any suitable amount. Typically, the crosslinking agent is present in amounts less than 5 parts based on total dry weight of adhesive composition. More specifically, the crosslinker may be present in amounts from 0.01 to 5 parts, preferably 0.05 to 1 parts, based on 100 parts total monomers of the low Tg copolymer.

In the context of the present disclosure, the first pressure sensitive adhesive composition comprises a crosslinking agent which is preferably selected from the group consisting of multifunctional aziridines, multifunctional isocyanates, multifunctional epoxides, benzophenone, triazines, multifunctional acrylates, multifunctional carboxylates, oxetanes, oxazolines, and any combinations or mixtures thereof. In a more preferred aspect, the crosslinking agent is selected from the group consisting of multifunctional acrylates.

The first pressure sensitive adhesive composition for use herein may optionally comprise a hydrogenated hydrocarbon tackifier in order to improve its adhesion properties, i.e. develop more aggressive tack.

Due to the high solubility parameter of most conventional pressure-sensitive acrylic adhesives and the presence of specific potential interactions between these adhesives and many tackifiers, a limited selection of tackifiers is available to the formulator. As a consequence, hydrocarbon-based tackifiers, and especially hydrogenated hydrocarbon resins, have been considered unsuitable for use in acrylic adhesives formulations due to their nonpolar character.

However, such hydrogenated hydrocarbon tackifiers may be advantageously used, as an optional ingredient, in combination with the high- and low Tg (meth)acrylate copolymers described *supra.* The tackifiers are typically used in amounts sufficient to strengthen the partial phase separation extent in the system. The incompatibility provided by such tackifiers may be used to produce pressure-sensitive adhesive compositions. As result of the incompatibility, it is observed that the glass transition of the adhesive composition is further broadened, relative to the combination of the high- and low Tg copolymers, which consequentially further improves its overall adhesions on LSE or even MSE substrates. If a compatible tackifier (those having good compatibility with the low Tg acrylic polymers) is added to a high- and low Tg copolymers blend, a significant drop in adhesion on LSE substrates is generally observed, and the advantageous effects from the phase separation of high- and low Tg copolymers may be generally lost.

Hydrogenated hydrocarbon tackifiers are traditionally used in more rubber-based adhesives rather than acrylic-based pressure sensitive adhesives. The hydrogenated hydrocarbon tackifiers are found to be particularly useful in the acrylate -based pressure sensitive adhesives for low surface energy substrates disclosed herein. Exemplary hydrogenated hydrocarbon tackifiers include C9 and C5 hydrogenated hydrocarbon tackifiers. Examples of C9 hydrogenated hydrocarbon tackifiers include those sold under the trade designation: "REGALITE S-5100", "REGALITE R-7100", "REGALITE R-9100", "REGALITE R-1125", "REGALITE S-7125", "REGALITE S-1100", "REGALITE R-1090", "REGALREZ 6108", "REGALREZ 1085", "REGALREZ 1094", "REGALREZ 1126", "REGALREZ 1139", and "REGALREZ 3103", sold by Eastman Chemical Co., Middelburg, Netherlands; "PICCOTAC" and EASTOTAC" sold by Eastman Chemical Co.; "ARKON P-140", "ARKON P-125", "ARKON P-115", "ARKON P-100", "ARKON P-90", "ARKON M-135", "ARKON M-115", "ARKON M-100", and "ARKON M-90" sold by Arakawa Chemical Inc., Chicago, IL; and "ESCOREZ 5000 series" sold by Exxon Mobil Corp., Irving, TX. Of particular interest are partially hydrogenated C9 hydrogenated tackifiers, preferably fully hydrogenated C9 hydrogenated tackifiers.

According to an exemplary aspect of the multilayer pressure sensitive adhesive assembly according to the disclosure, the first pressure sensitive adhesive composition comprises from 0.1 to 20 parts by weight, from 0.5 to 20 parts by weight, from 1 to 15 parts by weight, from 2 to 15 parts by weight, or even from 5 to 15 parts by weight of a hydrogenated hydrocarbon tackifier, preferably a fully hydrogenated hydrocarbon tackifier, based on 100 parts by weight of the low- and high- Tg (meth)acrylate copolymers.

Other additives can be added in order to enhance the performance of the first pressure sensitive adhesive composition. For example, leveling agents, ultraviolet light absorbers, hindered amine light stabilizers (HALS), oxygen inhibitors, wetting agents, rheology modifiers, defoamers, biocides, dyes and the like, can be included herein. All these additives and the use thereof are well known in the art. It is understood that any of these compounds can be used so long as they do not deleteriously affect the adhesive properties.

Useful as additives to the first pressure sensitive adhesive composition are UV absorbers and hindered amine light stabilizers. UV absorbers and hindered amine light stabilizers act to diminish the harmful effects of UV radiation on the final cured product and thereby enhance the weatherability, or resistance to cracking, yellowing and delamination of the coating. A preferred hindered amine light stabilizer is bis(1,2,2,6,6-pentamethyl-4-piperidinyl) [3,5-bis(1,1-dimethylethyl-4-hydroxyphenyl)methyl]butylpropanedioate, available as Tinuvin™144, from BASF.

In one particular aspect, the first pressure sensitive adhesive composition may include filler. Such compositions may include at least 40 wt-%, at least 45 wt-%, or even at least 50 wt-% filler, based on the total weight of the composition. In another particular aspect, the total amount of filler is at most 90 wt-%, at most 80 wt-%, or even at most 75 wt-% filler.

Fillers may be selected from one or more of a wide variety of materials, as known in the art, and include organic and inorganic filler. Inorganic filler particles include silica, submicron silica, zirconia, submicron zirconia, and non-vitreous microparticles of the type described in U.S. Pat. No. 4,503,169 (Randklev).

Filler components include nanosized silica particles, nanosized metal oxide particles, and combinations thereof. Nanofillers are also described in U.S. Pat. Nos. 7,090,721 (Craig et al.), 7,090,722 (Budd et al.), 7,156,911(Kangas et al.), and 7,649,029 (Kolb et al.).

Fillers may be either particulate or fibrous in nature. Particulate fillers may generally be defined as having a length to width ratio, or aspect ratio, of 20:1 or less, and more commonly 10:1 or less. Fibers can be defined as having aspect ratios greater than 20:1, or more commonly greater than 100:1. The shape of the particles can vary, ranging from spherical to ellipsoidal, or more planar such as flakes or discs. The macroscopic properties can be highly dependent on the shape of the filler particles, in particular the uniformity of the shape.

One particularly advantageous additive that may be incorporated in the first pressure sensitive adhesive composition is represented by chlorinated polyolefinic (co)polymers. Incorporating chlorinated polyolefinic (co)polymers in the first pressure sensitive adhesive composition significantly improves the stability upon heat bond ageing and heat/humidity bond ageing of the resulting pressure sensitive adhesive polymer layer, in particular on low surface energy (LSE) substrates.

Examples of suitable chlorinated polyolefinic (co)polymers for use herein include those sold under the trade designation: "CP 343-1", sold by Eastman Chemical Co.; "13-LP", "15-LP", "16-LP" and "17-LP" sold by Toyo Kasei Kogyo Co.Ltd; "Hypalon™ CP 827B", " Hypalon™ CP 163 " and " Hypalon™ CP 183 " sold by DuPont Co.; and "Tyrin™ CPE 4211P", "Tyrin™ CPE 6323A" and "Tyrin™ CPE 3615P" sold by Dow Chemical Co. In a preferred aspect, "CP 343-1" is used as chlorinated polyolefinic (co)polymer.

According to a preferred aspect of the present disclosure, the first pressure sensitive adhesive composition comprises a chlorinated polyolefinic (co)polymer, which is selected from the group consisting of chlorinated polypropylene, chlorinated polyethylene, chlorinated ethylene/vinyl acetate copolymer, and any combinations, mixtures or copolymers thereof. More preferably, the chlorinated polyolefinic (co)polymer is selected from the group of chlorinated polypropylenes.

The chlorinated polyolefinic (co)polymers, if present, are typically used in amounts of from 0.1 and 15 parts by weight, from 0.1 and 10 parts by weight, from 0.2 and 5 parts by weight, from 0.2 and 3 parts by weight, or even from 0.2 and 2 parts by weight based 100 parts of the low- and high- Tg (meth)acrylate (co)polymers.

The first pressure sensitive adhesive composition is generally prepared by simple blending of the high- and low Tg (meth)acrylate copolymer components, optionally with the tackifier. The polymers can be blended using several methods. The polymers can be blended by melt blending, solvent blending, or any suitable physical means. For example, the polymers can be melt blended by a method as described by Guerin et al. in U.S. Pat. No. 4,152,189, the disclosure of which is incorporated by reference herein. That is, all solvent (if used) is removed from each polymer by heating to a temperature of about 150°C to about 175°C at a reduced pressure. Although melt blending may be used, the adhesive blends of the present disclosure can also be processed using solvent blending. The acidic and basic polymers should be substantially soluble in the solvents used.

Physical blending devices that provide dispersive mixing, distributive mixing, or a combination of dispersive and distributive mixing are useful in preparing homogenous blends. Both batch and continuous methods of physical blending can be used. Examples of batch methods include BRABENDER (using a BRABENDER PREP CENTER, available from C. W. Brabender Instruments, Inc.; South Hackensack, N.J.) or BANBURY internal mixing and roll milling (using equipment available from FARREL COMPANY; Ansonia, Conn.). Examples of continuous methods include single screw extruding, twin screw extruding, disk extruding, reciprocating single screw extruding, and pin barrel single screw extruding. The continuous methods can include utilizing both distributive elements, such as cavity transfer elements (e.g., CTM, available from RAPRA Technology, Ltd.; Shrewsbury, England) and pin mixing elements, static mixing elements and dispersive elements (e.g., MADDOCK mixing elements or SAXTON mixing elements as described in "Mixing in Single-Screw Extruders," Mixing in Polymer Processing, edited by Chris Rauwendaal (Marcel Dekker Inc.: New York (1991), pp. 129, 176-177, and 185-186).

In aspects where the low Tg (meth)acrylate copolymer component is a solution copolymer, the low Tg (meth)acrylate copolymer in a solvent is combined with the high Tg (meth)acrylate (co)polymer and optionally the tackifier, mixed until homogenous, optionally coated, and dried to remove the solvent. When the low Tg (meth)acrylate polymer component is a syrup copolymer, the syrup copolymer is combined with the high Tg (meth)acrylate (co)polymer and optionally the tackifier, optional additional solvent monomer added, optionally coated and further polymerized.

The first pressure sensitive adhesive composition comprises at least 60 parts by weight, preferably at least 70 parts by weight, more preferably at least 80 parts by weight, of the low Tg (meth)acrylate copolymer component, which may be in the form of a solution or a syrup copolymer; up to 40 parts by weight, preferably 5 to 40 parts by weight, of the high Tg (meth)acrylate (co)polymer, with the sum of the high- and low Tg (co)polymer components 100 parts by weight. The tackifier, if present, is used in amounts sufficient to effect a partial phase separation of the components, and is generally used in amounts of 0.1 to 15 parts, preferably 0.1 to 10 parts by weight, relative to 100 parts by weight of the high- and low Tg (meth)acrylate (co)polymer components.

It is observed that the combination of the low Tg and high Tg (meth)acrylate (co)polymer components yields a microphase-separated pressure-sensitive adhesive after curing or drying wherein the low Tg (meth)acrylate copolymer is a continuous phase and the high Tg (meth)acrylate (co)polymer exists as relatively uniformly-shaped inclusions ranging in size from about 0.01 micrometer to about 0.1 micrometer. The microphase domains are separated by a diffuse boundary caused by the intermixing of the partially incompatible components at the interfaces. It is also observed that the microphase separation broadens of the glass transition of the adhesive composition, relative to that of the composition where the high and low Tg monomer units are copolymerized in a random fashion. One estimate of this effect is the peak width at a fixed height (FHPW) at half of the peak intensity of the Tan Delta curve from a dynamic mechanical analysis.

Surprisingly, the first pressure sensitive adhesive composition which exhibits microphase separation, provides substantial improvement in both peel adhesion and shear-holding capability on challenging-to-bond substrates, particularly LSE and MSE substrates, more particularly, LSE substrates, when compared to compositions having a homogenous structure or those having macro-phase separation. In particular, exceptional improvements in adhesion properties at elevated temperatures are achieved. Without wishing to be bound by theory, it is believed that such advantageous phase-separating effects are dependent on the weight average molecular weight (Mw) of the high Tg (co)polymer. If the weight average molecular weight (Mw) of the high Tg (co)polymer is less than 20.000 Daltons, the phase-separating effects are not sufficient to yield satisfactory adhesion performances at elevated temperatures.

The first pressure sensitive adhesive composition, which exhibits microphase separation, provides substantial improvement in both peel adhesion while maintaining acceptable values for other adhesive properties such as shear, when compared to compositions having a homogenous structure or those having macro-phase separation.

According to the present disclosure, the second pressure sensitive adhesive composition comprises:
a) a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof; and
b) optionally, a hollow non-porous particulate filler material.

According to the present disclosure, the second pressure sensitive adhesive layer as described herein takes the form of a polymeric foam layer.

In the context of the present disclosure, the term "polymeric foam" is meant to designate a material based on a polymer and which material comprises voids, typically in an amount of at least 5% by volume, typically from 10% to 55% by volume or from 10% to 45% by volume.

A polymeric foam layer for use herein has for example a thickness comprised between 100 and 6000 micrometers, between 200 and 4000 micrometers, between 500 and 2000 micrometers, or even between 800 and 1500 micrometers. As will be apparent to those skilled in the art, in the light of the present description, the preferred thickness of the second pressure sensitive adhesive polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or including hollow particles into the composition for the polymeric foam layer. For example, according to one method to create a polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated. Alternatively, the voids may result from the incorporation of hollow fillers, such as hollow polymeric particles, hollow glass microspheres or hollow ceramic microspheres.

In one beneficial aspect of the present disclosure, the second pressure sensitive adhesive polymeric foam layer is obtained by incorporation of hollow particulate filler material, in particular expandable microspheres, glass microspheres and glass bubbles.

In another advantageous aspect, the second pressure sensitive adhesive polymeric foam layer is obtained by frothing techniques, preferably by whipping a gas into the polymerizable second pressure sensitive adhesive composition.

According to still another advantageous aspect, the second pressure sensitive adhesive polymeric foam layer has a thickness comprised between 100 and 6000 micrometers, between 200 and 4000 micrometers, between 300 and 2000 micrometers, between 500 and 2000 micrometers, between 800 and 1500 micrometers, or even between 400 and 1500 micrometers.

According to an advantageous aspect of the present disclosure, the multilayer pressure sensitive adhesive assembly for use herein is in the form of a skin/core multilayer pressure sensitive adhesive assembly, wherein the first pressure sensitive adhesive polymeric layer is the skin layer of the multilayer pressure sensitive adhesive assembly, and the second pressure sensitive adhesive polymeric foam layer is the core layer of the multilayer pressure sensitive adhesive assembly.

Multilayer pressure sensitive adhesive assemblies of this type, and in particular dual layer polymeric foam tape assemblies, are particularly advantageous when compared to single-layer pressure sensitive adhesives, in that adhesion (quick adhesion) can be adjusted by the formulation of the second pressure sensitive adhesive layer (also commonly referred to as the skin layer), while other properties/requirements of the overall assembly such as application issues, deforming issues and energy distribution may be addressed by appropriate formulation of the polymeric foam layer (also commonly referred to as the core layer).

According to a further advantageous aspect, the multilayer pressure sensitive adhesive assembly of the present disclosure is in the form of a multilayer pressure sensitive adhesive assembly further comprising a third pressure sensitive adhesive layer thereby forming e.g. a three-layered multilayer pressure sensitive adhesive assembly. Preferably, the third pressure sensitive adhesive layer is adjacent to the second pressure sensitive adhesive polymeric foam layer in the side of the second pressure sensitive adhesive polymeric foam layer which is opposed to the side of the second pressure sensitive adhesive polymeric foam layer adjacent to the first pressure sensitive adhesive polymeric layer. Preferably still, the second pressure sensitive adhesive polymeric foam layer, the first pressure sensitive adhesive polymeric layer and the third pressure sensitive adhesive layer are superimposed.

In a beneficial aspect, the multilayer pressure sensitive adhesive assembly is in the form of a skin/core/skin multilayer pressure sensitive adhesive assembly, wherein the second pressure sensitive adhesive polymeric foam layer is the core layer of the multilayer pressure sensitive adhesive assembly, the first pressure sensitive adhesive layer is the first skin layer of the multilayer pressure sensitive adhesive assembly and the third pressure sensitive adhesive layer is the second skin layer of the multilayer pressure sensitive adhesive assembly.

The second pressure sensitive adhesive layer and/or the third pressure sensitive adhesive layer may have any composition commonly known in the art. As such, the composition of the second pressure sensitive adhesive layer and/or third pressure sensitive adhesive layer for use in the multilayer pressure sensitive adhesive assemblies of the present disclosure are not particularly limited.

In a particular aspect, the second pressure sensitive adhesive layer and/or third pressure sensitive adhesive layer comprise a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

In a typical aspect, the second pressure sensitive adhesive layer and/or third pressure sensitive adhesive layer comprise a polymer base material selected from the group consisting of polyacrylates, polyurethanes, and any combinations, copolymers or mixtures thereof. According to another typical aspect, the second pressure sensitive adhesive layer and/or third pressure sensitive adhesive layer comprise a polymer base material selected from the group consisting of polyacrylates, and any combinations, copolymers or mixtures thereof.

According to a preferred aspect of the pressure sensitive adhesive assemblies of the present disclosure, the second pressure sensitive adhesive layer and/or third pressure sensitive adhesive layer comprise a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

According to a preferred aspect of the pressure sensitive adhesive assemblies of the present disclosure, the second pressure sensitive adhesive layer and/or third pressure sensitive adhesive layer comprise a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, isooctyl (meth)acrylate, 2-octyl(meth)acrylate, 2-ethylhexyl (meth)acrylate, decyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, 2-propylheptyl (meth)acrylate, stearyl (meth)acrylate, isobornyl (meth)acrylate, benzyl (meth)acrylate, nonyl (meth)acrylate, isophoryl (meth)acrylate, and any combinations or mixtures thereof.

In a more preferred aspect, the linear or branched alkyl (meth)acrylate ester is selected from the group consisting of isooctyl (meth)acrylate, 2-ethylhexyl (meth)acrylate, 2-propylheptyl (meth)acrylate, butyl acrylate, 2-octyl (meth)acrylate, and any combinations or mixtures thereof; more preferably from the group consisting of isooctyl acrylate, 2-octyl (meth)acrylate, 2-ethylhexyl (meth)acrylate and 2-propylheptyl (meth)acrylate, and any combinations or mixtures thereof; even more preferably from the group consisting of isooctyl acrylate, 2-ethylhexyl acrylate, 2-propylheptyl acrylate, and any combinations or mixtures thereof.

According to an alternative aspect of the multilayer pressure sensitive adhesive assembly of the present disclosure, the second pressure sensitive adhesive layer and/or third pressure sensitive adhesive layer have a (co)polymeric composition identical or similar to the composition described above for the first pressure sensitive adhesive polymeric layer.

According to a particular aspect of the pressure sensitive adhesive assemblies of the present disclosure, the second pressure sensitive adhesive layer and/or third pressure sensitive adhesive layer comprise a polymer base material further comprising a polar comonomer, preferably a polar acrylate comonomer. Preferably, the polar comonomer is selected from the group consisting of acrylic acid; methacrylic acid; itaconic acid; hydroxyalkyl acrylates; nitrogen-containing acrylate monomers, in particular acrylamides and substituted acrylamides, acrylamines and substituted acrylamines; and any combinations or mixtures thereof.

In an advantageous aspect of the pressure sensitive adhesive assemblies of the present disclosure, the second pressure sensitive adhesive layer and/or third pressure sensitive adhesive layer comprise a polymer base material which further comprises a second monomer having an ethylenically unsaturated group, preferably a second non-polar monomer having an ethylenically unsaturated group. Advantageously, the second monomer having an ethylenically unsaturated group for use herein is selected from the group consisting of isobornyl (meth)acrylate, cyclohexyl (meth)acrylate, isophoryl (meth)acrylate, cyclohexyl (meth)acrylate, and any combinations or mixtures thereof; more preferably, the second monomer is selected to be isobornyl (meth)acrylate.

According to one exemplary aspect of the pressure sensitive adhesive assemblies of the present disclosure, the second pressure sensitive adhesive layer and/or third pressure sensitive adhesive layer comprises a tackifying resin, in particular a hydrocarbon tackifying resin. Advantageously, the tackifying resin is selected from the group consisting of C5-based hydrocarbon resins, C9-based hydrocarbon resins, C5/C9-based hydrocarbon resins, and any combinations or mixtures or hydrogenated versions thereof.

According to an advantageous aspect of the pressure sensitive assembly of the present disclosure, the polymerizable material used to produce the second pressure sensitive adhesive layer and/or third pressure sensitive adhesive layer, comprises:
a) from 50 to 99.5 weight percent, or from 60 to 95 weight percent, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate, butyl acrylate; optionally
b) from 1.0 to 50 weight percent, from 3.0 to 40 weight percent, from 5.0 to 35 weight percent, or even from 10 to 30 weight percent, of the second monomer having an ethylenically unsaturated group, preferably a second non-polar monomer having an ethylenically unsaturated group; optionally
c) from 0.1 to 15 weight percent, from 0.5 to 15 weight percent, from 1.0 to 10 weight percent, from 2.0 to 8.0 weight percent, from 2.5 to 6.0 weight percent, or even from 3.0 to 6.0 weight percent of a polar monomer, preferably a polar acrylate; and optionally
d) a tackifying resin,
wherein the weight percentages are based on the total weight of polymerizable material used to produce the second pressure sensitive adhesive layer or the third pressure sensitive adhesive layer.

As already described above with regard to the first pressure sensitive adhesive composition, other additives can be added in order to enhance the performance of the second pressure sensitive adhesive layer and/or third pressure sensitive adhesive compositions. All the additional additives for use in the first pressure sensitive adhesive composition may be used in the second pressure sensitive adhesive layer and/or third pressure sensitive adhesive compositions without any special restriction.

According to an advantageous aspect of the pressure sensitive adhesive assemblies of the present disclosure, the second pressure sensitive adhesive layer and/or third pressure sensitive adhesive layer comprise a polymer base material which further comprises a chlorinated polyolefinic (co)polymer. The incorporation of chlorinated polyolefinic (co)polymers in the curable precursor of the second pressure sensitive adhesive layer and/or third pressure sensitive adhesive layer significantly improves the stability upon heat bond ageing and heat/humidity bond ageing of the resulting pressure sensitive adhesive polymer layer, in particular on low surface energy (LSE) substrates.

Examples of suitable chlorinated polyolefinic (co)polymers for use herein include those sold under the trade designation: "CPO 343-1", sold by Eastman Chemical Co.; "13-LP", "15-LP", "16-LP" and "17-LP" sold by Toyo Kasei Kogyo Co.Ltd; "Hypalon™ CP 827B", " Hypalon™ CP 163 " and " Hypalon™ CP 183 " sold by DuPont Co.; and "Tyrin™ CPE 4211P", "Tyrin™ CPE 6323A" and "Tyrin™ CPE 3615P" sold by Dow Chemical Co. In a preferred aspect, "CPO 343-1" is used as chlorinated polyolefinic (co)polymer.

According to a preferred aspect of the present disclosure, the curable precursor of the second pressure sensitive adhesive layer and/or third pressure sensitive adhesive layer comprises a chlorinated polyolefinic (co)polymer, which is selected from the group consisting of chlorinated polypropylene, chlorinated polyethylene, chlorinated ethylene/vinyl acetate copolymer, and any combinations, mixtures or copolymers thereof. More preferably, the chlorinated polyolefinic (co)polymer is selected from the group of chlorinated polypropylenes.

According to another advantageous aspect of the pressure sensitive adhesive assemblies of the present disclosure, the second pressure sensitive adhesive layer and/or third pressure sensitive adhesive layer comprise hollow non-porous particulate filler material, in particular expandable microspheres, glass microspheres and glass bubbles, wherein the surface of the hollow non-porous particulate filler material is provided with a hydrophobic or hydrophilic surface modification, preferably a hydrophobic surface modification.

According to still another advantageous aspect of the pressure sensitive adhesive assemblies of the present disclosure, the second pressure sensitive adhesive layer and/or third pressure sensitive adhesive layer comprise glass microspheres, the surface of which is provided with a hydrophobic or hydrophilic surface modification, preferably a hydrophobic surface modification.

In a particularly beneficial aspect, the second pressure sensitive adhesive layer and/or third pressure sensitive adhesive layer for use herein comprise a filler material which is preferably selected from the group consisting of filler particles, in particular expanded perlite, silica type fillers, hydrophobic silica type fillers, hydrophilic silica type fillers, hydrophobic fumed silica, hydrophilic fumed silica, fibers, nanoparticles, in particular silica nanoparticles, and any combinations or mixtures thereof.

According to a typical aspect of the present disclosure, the second pressure sensitive adhesive layer for use herein comprises a second pressure sensitive adhesive composition comprising:
a) from 50 to 99.5 weight percent, from 60 to 99 weight percent, or even from 70 to 99 weight percent, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate; optionally
b) from 0.1 to 15 weight percent, from 0.5 to 15 weight percent, from 1.0 to 10 weight percent, from 2.0 to 8.0 weight percent, from 2.5 to 6.0 weight percent, or even from 3.0 to 6.0 weight percent of a polar monomer, preferably a polar acrylate; and optionally
c) from 0.1 to 25 weight percent, from 0.5 to 20 weight percent, from 1 to 20 weight percent, from 5 to 20 weight percent, from 8 to 20 weight percent, from 10 to 20 weight percent, or even from 12 to 20 weight percent of a tackifying resin, preferably a hydrogenated hydrocarbon tackifier;
wherein the weight percentages are based on the total weight of polymerizable material.

According to an advantageous aspect, the specific pressure sensitive adhesive assemblies as described above are obtained by a wet-on-wet coating process step. Exemplary "wet-in-wet" production processes for use herein are described in detail in e.g. WO-A1-2011094385 (Hitschmann et al.) or in EP-A1-0259094 (Zimmerman et al.), the full disclosures of which are herewith incorporated by reference.

According to a typical aspect, the multilayer pressure sensitive adhesive assembly for use herein, has a peel strength value of more than 10 N/cm, more than 12 N/cm, more than 15 N/cm, more than 18 N/cm, more than 20 N/cm, more than 22 N/cm, more than 25 N/cm, or even more than more than 27 N/cm, when measured at 23°C according to the peel adhesion on oily contaminated aluminum surface test method described in the experimental section.

According to another typical aspect, the multilayer pressure sensitive adhesive assembly for use herein, exhibits a decrease in peel strength of less than 60%, less than 55%, less than 50%, less than 45%, or even less than 40%, when measured according to the comparative peel adhesion test method described in the experimental section.

Advantageously, the multilayer pressure sensitive adhesive assemblies for use herein, exhibit excellent heat bond ageing resistance and/or heat/humidity bond ageing on various challenging-to-bond substrates, particularly LSE and MSE substrates, more particularly, LSE substrates.

According to another aspect, the present disclosure relates to a method for adhesively bonding oily contaminated substrates, which comprises the steps of:
a) providing a first oily contaminated substrate;
b) providing a second oily contaminated substrate;
c) providing a multilayer pressure sensitive adhesive assembly as described in any of the preceding claims;
d) adhering the first pressure sensitive adhesive polymeric layer to the first oily contaminated substrate; and
e) adhering the second oily contaminated substrate to the second pressure sensitive adhesive polymeric foam layer or the optional third pressure sensitive adhesive layer.

According to an advantageous aspect of the method, the adhering step(s) are performed without using a pre-cleaning step of the substrates and/or without using an adhesion promoter, in particular a priming composition or a tie layer.

Particular and preferred aspects relating to the substrates, parts, surfaces, articles and devices for use in the method for adhesively bonding oily contaminated substrates of the present disclosure, are identical to those detailed above in the context of describing the method of manufacturing an electronic control device of the disclosure.

According to another aspect, the present disclosure is directed to a composite assembly comprising:
a) an electronic control device comprising a housing body comprising a first part and a second part as described above; and
b) a multilayer pressure sensitive adhesive assembly as described above, wherein the first pressure sensitive adhesive polymeric layer is adhered to the first part of the housing body, and the second pressure sensitive adhesive polymeric foam layer is adhered to the second part of the housing body.

According to still another aspect, the present disclosure relates to a composite assembly comprising:
a) an oily contaminated substrate; and
b) a multilayer pressure sensitive adhesive assembly as described above wherein the first pressure sensitive adhesive polymeric layer is adhered to the oily contaminated substrate.

According to a particular aspect, the composite assembly comprises:
a) a first oily contaminated substrate;
b) a second oily contaminated substrate; and
c) a multilayer pressure sensitive adhesive assembly as described above, wherein the first pressure sensitive adhesive polymeric layer is adhered to the first oily contaminated substrate, and the second pressure sensitive adhesive polymeric foam layer or the optional third pressure sensitive adhesive layer is adhered to the second oily contaminated substrate.

Particular and preferred aspects relating to the substrates, parts, surfaces, articles, and electronic control devices for use in the composite assembly of the present disclosure, are identical to those detailed above in the context of describing the various methods of the disclosure.

According to still another aspect, the present disclosure relates to the use of a multilayer pressure sensitive adhesive assembly as describe above for manufacturing an electronic control device comprising a housing body comprising a first part and a second part.

According to yet another aspect, the present disclosure relates to the use of a multilayer pressure sensitive adhesive assembly as describe above for adhesively bonding to an oily contaminated surface.

Particular and preferred aspects relating to the substrates, parts, surfaces, articles, and electronic control devices for use in the particular uses of the present disclosure, are identical to those detailed above in the context of describing the various methods and composite assemblies of the disclosure.

Item 1 is a method of manufacturing an electronic control device comprising a housing body comprising a first part and a second part, wherein the method comprises the steps of:
1) providing a housing body comprising a first part and a second part;
2) providing a multilayer pressure sensitive adhesive assembly comprising a first pressure sensitive adhesive polymeric layer having a first pressure sensitive adhesive composition adjacent to a second pressure sensitive adhesive polymeric foam layer having a second pressure sensitive adhesive composition; wherein the second pressure sensitive adhesive composition comprises:
   a) a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof; and
   b) optionally, a hollow non-porous particulate filler material;
3) adhering the first pressure sensitive adhesive polymeric layer to the first part; and
4) adhering the second part to the second pressure sensitive adhesive polymeric foam layer.

Item 2 is a method according to item 1, wherein the first part and/or the second part comprise a material selected from the group consisting of metals, in particular aluminum, steel, iron; glass; ceramic material; polymers, in particular polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); fiber-reinforced polymers; clear coat surfaces, in particular clear coats for vehicles like a car; and any combinations, mixtures or blends thereof.

Item 3 is a method according to any of item 1 or 2, wherein the first part and/or the second part comprise a material selected from the group consisting of polymers, in particular polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); fiber-reinforced polymers; clear coat surfaces, in particular clear coats for vehicles like a car; and any combinations, mixtures or blends thereof.

Item 4 is a method according to any of preceding items, wherein the first part and/or the second part comprise a metal selected from the group consisting of aluminum, steel, iron, and any mixtures, combinations or alloys thereof.

Item 5 is a method according to item 4, wherein the cover part and/or the base part comprise a metal selected from the group consisting of aluminum, steel, stainless steel and any mixtures, combinations or alloys thereof.

Item 6 is a method according to item 5, wherein the cover part and/or the base part comprise aluminum.

Item 7 is a method according to any of the preceding items, wherein the first part and/or the second part comprise an uneven surface which is in particular selected from the group of curved surfaces, bended surfaces, twisted surfaces, angled surfaces, arched surfaces, arced surfaces, and any combinations thereof.

Item 8 is a method according to any of the preceding items, wherein the first part and/or the second part comprise an uneven surface which is in particular provided with at least one structure selected from the group consisting of cavities, holes, apertures, orifices, pits, openings, gaps, troughs, edges, depressions, and any combinations thereof.

Item 9 is a method according to any of the preceding items, wherein the cover part and/or the base part comprise a surface which is at least partly oily contaminated.

Item 10 is a method according to any of the preceding items, wherein the first part is the cover part and the second part is the base part of the housing body.

Item 11 is a method according to any of items 1 to 9, wherein the first part is the base part and the second part is the cover part of the housing body.

Item 12 is a method according to any of the preceding items, wherein the adhering step(s) are performed without using a pre-cleaning step of the first part and/or the second part, and/or without using an adhesion promoter, in particular a priming composition or a tie layer.

Item 13 is a method according to any of the preceding items, wherein the electronic control device is selected from the group consisting of electronic control units, in particular automotive vehicle electronic control units.

Item 14 is a method according to item 13, wherein the electronic control device is an automotive vehicle electronic control unit selected from the group consisting of engine control units, powertrain control units, transmission control units, brake control units, central control units, central timing units, general electronic units, body control units, suspension control units, steering control units.

Item 15 is a method according to any of item 13 or 14, wherein the electronic control device is an automotive vehicle electronic control unit selected from the group consisting of engine control units; brake control units, in particular anti-lock braking system (ABS) units, and steering control units, in particular electronic stability control program (ESP) units.

Item 16 is a method according to any of the preceding items, wherein the first pressure sensitive adhesive composition comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

Item 17 is a method according to any of the preceding items, wherein the first pressure sensitive adhesive composition comprises a polymer base material selected from the group consisting of polyacrylates.

Item 18 is a method according to any of the preceding items, wherein the first pressure sensitive adhesive composition comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

Item 19 is a method according to any of the preceding items, wherein the first pressure sensitive adhesive composition further comprises a tackifying resin, in particular a hydrocarbon tackifying resin, more in particular a hydrogenated hydrocarbon tackifying resin.

Item 20 is a method according to any of the preceding items, wherein the first pressure sensitive adhesive composition comprises:
a) 60 parts by weight or greater of a low Tg (meth)acrylate copolymer comprising:
   i. C₁-C₃₂ (meth)acrylic acid ester monomer units;
   ii. optionally, acid functional ethylenically unsaturated monomer units;
   iii. optionally, non-acid functional, ethylenically unsaturated polar monomer units;
   iv. optionally, vinyl monomer units; and
   v. optionally, multifunctional (meth)acrylate monomer units, and
b) up to 40 parts by weight of a high Tg (meth)acrylate copolymer having a weight average molecular weight (Mw) of above 20,000 Daltons, and comprising:
   i. high Tg (meth)acrylic acid ester monomer units;
   ii. optionally, acid functional ethylenically unsaturated monomer units;
   iii. optionally, low Tg (meth)acrylic acid ester monomer units;
   iv. optionally, non-acid functional, ethylenically unsaturated polar monomer units;
   v. optionally, vinyl monomer units;
   vi. optionally, a chlorinated polyolefinic (co)polymer; and
c) optionally, up to 20 parts by weight of a hydrocarbon tackifying resin, in particular a hydrogenated hydrocarbon tackifying resin, based on 100 parts by weight of copolymers a) and b).

Item 21 is a method according to item 20, wherein low Tg (meth)acrylate copolymer comprises C₁-C₂₄ (meth)acrylic acid ester monomer units, or even C₁-C₁₈ (meth)acrylic acid ester monomer units.

Item 22 is a method according to any of item 20 or 21, wherein the low Tg (meth)acrylate copolymer has a Tg of below 20°C, or even below 0°C.

Item 23 is a method according to any of items 20 to 22, wherein the low Tg (meth)acrylate copolymer comprises:
i. from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight of C₁-C₃₂ (meth)acrylic acid ester monomer units, C₁-C₂₄ (meth)acrylic acid ester monomer units, or even C₁-C₁₈ (meth)acrylic acid ester monomer units;
ii. from 0.5 to 15 parts by weight of acid-functional ethylenically unsaturated monomer units;
iii. from 0 to 10 parts by weight of non-acid functional, ethylenically unsaturated polar monomer units;
iv. from 0 to 5 parts vinyl monomer units; and
v. from 0 to 5 parts of multifunctional (meth)acrylate monomer units;
based on 100 parts by weight of the total monomers of the low Tg copolymer.

Item 24 is a method according to any of items 20 to 23, wherein the low Tg (meth)acrylate copolymer comprises:
i. from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight of (meth)acrylic acid ester monomer units of non-tertiary Ci-C32 alcohols, non-tertiary C₁-C₂₄ alcohols, or even non-tertiary C₁-C₁₈ alcohols;
ii. from 0.5 to 15 parts by weight of acid-functional ethylenically unsaturated monomer units;
iii. from 0 to 10 parts by weight of non-acid functional, ethylenically unsaturated polar monomer units;
iv. from 0 to 5 parts vinyl monomer units; and
v. from 0 to 5 parts of multifunctional (meth)acrylate monomer units;
based on 100 parts by weight of the total monomers of the low Tg copolymer.

Item 25 is a method according to any of items 20 to 24, wherein the C₁-C₃₂ (meth)acrylic acid ester monomer units, the C₁-C₂₄ (meth)acrylic acid ester monomer units, or even the C₁-C₁₈ (meth)acrylic acid ester monomer units of the low Tg (meth)acrylate copolymer are selected from the group consisting of (meth)acrylic esters of ethanol, 1-propanol, 2-propanol, 1-butanol, 2-butanol, 1-pentanol, 2-pentanol, 3-pentanol, 2-methyl-1-butanol, 3-methyl-1-butanol, 1-hexanol, 2-hexanol, 2-methyl-1-pentanol, 3-methyl-1-pentanol, 2-ethyl-1-butanol, 3,5,5-trimethyl-1-hexanol, 3-heptanol, 1-octanol, 2-octanol, isooctylalcohol, 2-ethyl-1-hexanol, 1-decanol, 2-propylheptanol, 1-dodecanol, 1-tridecanol, 1-tetradecanol, citronellol, dihydrocitronellol, and any combinations or mixtures thereof; more preferably from the group consisting of (meth)acrylic esters of 2-octanol, citronellol, dihydrocitronellol, and any combinations or mixtures thereof.

Item 26 is a method according to any of items 20 to 25, wherein the C₁-C₃₂ (meth)acrylic acid ester monomer units, the C₁-C₂₄ (meth)acrylic acid ester monomer units, or even the C₁-C₁₈ (meth)acrylic acid ester monomer units of the low Tg (meth)acrylate copolymer comprise acrylic esters of 2-alkyl alkanols.

Item 27 is a method according to any of items 20 to 26, wherein the C₁-C₃₂ (meth)acrylic acid ester monomer units, the C₁-C₂₄ (meth)acrylic acid ester monomer units, or even the C₁-C₁₈ (meth)acrylic acid ester monomer units of the low Tg (meth)acrylate copolymer comprise esters of (meth)acrylic acid with non-tertiary alcohols selected from the group consisting of 2-ethyl-1-hexanol, 2-propylheptanol, isooctylalcohol and 2-octanol.

Item 28 is a method according to any of items 20 to 27, wherein the C₁-C₃₂ (meth)acrylic acid ester monomer units, the C₁-C₂₄ (meth)acrylic acid ester monomer units, or even the C₁-C₁₈ (meth)acrylic acid ester monomer units of the low Tg (meth)acrylate copolymer comprise esters of (meth)acrylic acid with non-tertiary alcohols selected from the group consisting of 2-ethyl-1-hexanol and 2-propylheptanol.

Item 29 is a method according to any of items 20 to 28, wherein the high Tg (meth)acrylate copolymer has a Tg of above 50°C, above 75°C, or even above 100°C.

Item 30 is a method according to any of items 20 to 29, wherein the high Tg (meth)acrylate copolymer has a weight average molecular weight (Mw) of above 25,000 Daltons, above 30,000 Daltons, above 35,000 Daltons, or even above 40,000 Daltons.

Item 31 is a method according to any of items 20 to 30, wherein the high Tg (meth)acrylate copolymer has a weight average molecular weight (Mw) of below 100,000 Daltons, below 80,000 Daltons, below 75,000 Daltons, below 60,000 Daltons, below 50,000 Daltons, or even below 45,000 Daltons.

Item 32 is a method according to any of items 20 to 31, wherein the high Tg (meth)acrylate copolymer comprises:
i. up to 100 parts by weight of high Tg (meth)acrylic acid ester monomer units;
ii. from 0 to 15, or even from 1 to 5 parts by weight of acid functional ethylenically unsaturated monomer units;
iii. from 0 to 50, or even from 1 to 25 parts by weight of optional low Tg (meth)acrylic acid ester monomer units;
iv. from 0 to 10, or even from 1 to 5 parts by weight of optional non-acid functional, ethylenically unsaturated polar monomer units; and
v. from 0 to 5, or even from 1 to 5 parts by weight of optional vinyl monomer units;
based on 100 parts by weight of the total monomers of the high Tg (meth)acrylate copolymer.

Item 33 is a method according to any of items 20 to 32, wherein the high Tg (meth)acrylic acid ester monomer units are selected from the group consisting of t-butyl (meth)acrylate, methyl (meth)acrylate, ethyl (meth)acrylate, isopropyl (meth)acrylate, n-butyl (meth)acrylate, isobutyl (meth)acrylate, s-butyl (meth)acrylate, t-butyl (meth)acrylate, stearyl (meth)acrylate, phenyl (meth)acrylate, cyclohexyl (meth)acrylate, isobornyl (meth)acrylate, benzyl (meth)acrylate, 3,3,5 trimethylcyclohexyl (meth)acrylate, cyclohexyl (meth)acrylate, N-octyl acrylamide, propyl (meth)acrylate, and any mixtures thereof.

Item 34 is a method according to any of items 20 to 33, wherein the low Tg (meth)acrylic acid ester monomer units are selected from the group consisting of n-butyl acrylate, isobutyl acrylate, hexyl acrylate, 2-ethyl-hexylacrylate, isooctylacrylate, caprolactoneacrylate, isodecylacrylate, tridecylacrylate, laurylmethacrylate, methoxy-polyethylenglycol-monomethacrylate, laurylacrylate, tetrahydrofurfuryl-acrylate, ethoxy-ethoxyethyl acrylate, ethoxylated-nonylacrylate, and any mixtures thereof.

Item 35 is a method according to any of items 20 to 34, wherein the acid functional ethylenically unsaturated monomer units are selected from the group consisting of acrylic acid, methacrylic acid, itaconic acid, fumaric acid, crotonic acid, citraconic acid, maleic acid, oleic acid, β-carboxyethyl (meth)acrylate, 2-sulfoethyl methacrylate, styrene sulfonic acid, 2-acrylamido-2-methylpropanesulfonic acid, vinylphosphonic acid, and any mixtures thereof.

Item 36 is a method according to any of items 20 to 35, wherein the non-acid functional, ethylenically unsaturated polar monomer units are selected from the group consisting of 2-hydroxyethyl (meth)acrylate, N-vinylpyrrolidone, N-vinylcaprolactam, acrylamides, poly(alkoxyalkyl) (meth)acrylates, alkyl vinyl ethers, and any mixtures thereof.

Item 37 is a method according to any of items 20 to 36, wherein the vinyl monomer units are selected from the group consisting of vinyl esters, styrene, substituted styrene, vinyl halide, and any mixtures thereof.

Item 38 is a method according to any of items 20 to 37, wherein the multifunctional acrylate monomer units are selected from the group consisting of di(meth)acrylates, tri(meth)acrylates, and tetra(meth)acrylates, such as 1,6-hexanediol di(meth)acrylate, poly(ethylene glycol) di(meth)acrylates, polybutadiene di(meth)acrylate, polyurethane di(meth)acrylates, and propoxylated glycerin tri(meth)acrylate, and mixtures thereof.

Item 39 is a method according to any of items 20 to 38, wherein the first pressure sensitive adhesive composition comprises from 0.1 to 25 parts by weight, from 0.5 to 22 parts by weight, from 1 to 20 parts by weight, or even from 5 to 20 parts by weight of a hydrogenated hydrocarbon tackifier, preferably a fully hydrogenated hydrocarbon tackifier, based on 100 parts by weight of copolymers a) and b).

Item 40 is a method according to any of items 20 to 39, wherein the tackifying resin is selected from the group consisting of hydrogenated C5-based hydrocarbon resins, hydrogenated C9-based hydrocarbon resins, hydrogenated C5/C9-based hydrocarbon resins, and any combinations or mixtures thereof.

Item 41 is a method according to any of items 20 to 40, wherein the first pressure sensitive adhesive composition comprises a chlorinated polyolefinic (co)polymer, which is preferably selected from the group consisting of chlorinated polypropylene, chlorinated polyethylene, chlorinated ethylene/vinyl acetate copolymer, and any combinations, mixtures or copolymers thereof.

Item 42 is a method according to any of items 20 to 41, wherein the first pressure sensitive adhesive composition comprises a chlorinated polyolefinic (co)polymer in an amount comprised between 0.1 and 15 parts by weight, between 0.1 and 10 parts by weight, between 0.2 and 5 parts by weight, between 0.2 and 3 parts by weight, or even between 0.2 and 2 parts by weight based on 100 parts by weight of copolymers a) and b).

Item 43 is a method according to any of preceding items, wherein the second pressure sensitive adhesive polymeric foam layer is obtained by incorporation of hollow non-porous particulate filler material, in particular expandable microspheres, glass microspheres and glass bubbles.

Item 44 is a method according to any of preceding items, wherein the second pressure sensitive adhesive polymeric foam layer is obtained by frothing techniques, preferably by whipping a gas into the polymerizable pressure sensitive adhesive composition.

Item 45 is a method according to any of preceding items, wherein the second pressure sensitive adhesive polymeric foam layer has a thickness comprised between 100 and 6000 micrometers, between 200 and 4000 micrometers, between 300 and 2000 micrometers, between 500 and 2000 micrometers, between 800 and 1500 micrometers, or even between 400 and 1500 micrometers.

Item 46 is a method according to any of preceding items, which is in the form of a skin/core multilayer pressure sensitive adhesive assembly, wherein the first pressure sensitive adhesive polymeric layer is the skin layer of the multilayer pressure sensitive adhesive assembly, and the second pressure sensitive adhesive polymeric foam layer is the core layer of the multilayer pressure sensitive adhesive assembly.

Item 47 is a method according to any of preceding items, which is in the form of a multilayer pressure sensitive adhesive assembly further comprising a third pressure sensitive adhesive layer which is preferably adjacent to the second pressure sensitive adhesive polymeric foam layer in the side of the second pressure sensitive adhesive polymeric foam layer which is opposed to the side of the second pressure sensitive adhesive polymeric foam layer adjacent to the first pressure sensitive adhesive polymeric layer.

Item 48 is a method according to item 47, which is in the form of a skin/core/skin multilayer pressure sensitive adhesive assembly, wherein the second pressure sensitive adhesive polymeric foam layer is the core layer of the multilayer pressure sensitive adhesive assembly, the first pressure sensitive adhesive layer is the first skin layer of the multilayer pressure sensitive adhesive assembly and the third pressure sensitive adhesive layer is the second skin layer of the multilayer pressure sensitive adhesive assembly.

Item 49 is a method according to any of item 47 or 48, wherein the second pressure sensitive adhesive layer and/or the third pressure sensitive adhesive layer comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

Item 50 is a method according to any of items 47 to 49, wherein the second pressure sensitive adhesive layer and/or the third pressure sensitive adhesive layer comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

Item 51 is a method according to any of items 47 to 50, wherein the second pressure sensitive adhesive layer and/or the third pressure sensitive adhesive layer comprises a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, 2-propylheptyl (meth)acrylate, stearyl (meth)acrylate, isobornyl (meth)acrylate, benzyl (meth)acrylate, nonyl (meth)acrylate, isophoryl (meth)acrylate, and any combinations or mixtures thereof.

Item 52 is a method according to any of item 50 or 51, wherein the linear or branched alkyl (meth)acrylate ester is selected from the group consisting of isooctyl (meth)acrylate, 2-ethylhexyl (meth)acrylate, 2-propylheptyl (meth)acrylate, 2-octyl (meth)acrylate, butyl acrylate, and any combinations or mixtures thereof.

Item 53 is a method according to any of items 50 to 52, wherein the linear or branched alkyl (meth)acrylate ester is selected from the group consisting of isooctyl acrylate, 2-ethylhexyl acrylate, 2-propylheptyl acrylate, and any combinations or mixtures thereof.

Item 54 is a method according to any of items 50 to 53, wherein the second pressure sensitive adhesive layer and/or the third pressure sensitive adhesive layer comprises a polymer base material which further comprises a polar comonomer, preferably a polar acrylate comonomer.

Item 55 is a method according to any of items 50 to 54, wherein the second pressure sensitive adhesive layer and/or the third pressure sensitive adhesive layer comprises a polymer base material which further comprises a polar acrylate comonomer selected from the group consisting of acrylic acid; methacrylic acid; itaconic acid; hydroxyalkyl acrylates; nitrogen-containing acrylate monomers, in particular acrylamides and substituted acrylamides, acrylamines and substituted acrylamines; and any combinations or mixtures thereof.

Item 56 is a method according to item 55, wherein the polar acrylate comonomer is acrylic acid.

Item 57 is a method according to any of items 50 to 56, wherein the second pressure sensitive adhesive layer and/or the third pressure sensitive adhesive layer comprises a polymer base material which further comprises a second monomer having an ethylenically unsaturated group, preferably a second non-polar monomer having an ethylenically unsaturated group.

Item 58 is a method according to item 57, wherein the second monomer having an ethylenically unsaturated group for use herein is selected from the group consisting of isobornyl (meth)acrylate, cyclohexyl (meth)acrylate, isophoryl (meth)acrylate, cyclohexyl (meth)acrylate, and any combinations or mixtures thereof; more preferably, the second monomer is selected to be isobornyl (meth)acrylate.

Item 59 is a method according to any of items 50 to 58, wherein the second pressure sensitive adhesive layer and/or the third pressure sensitive adhesive layer further comprises a tackifying resin, in particular a hydrocarbon tackifying resin.

Item 60 is a method according to item 59, wherein the tackifying resin is selected from the group consisting of C5-based hydrocarbon resins, C9-based hydrocarbon resins, C5/C9-based hydrocarbon resins, and any combinations or mixtures or hydrogenated versions thereof.

Item 61 is a method according to any of items 50 to 60, wherein the second pressure sensitive adhesive layer and/or the third pressure sensitive adhesive layer comprises a polymer base material which further comprises a chlorinated polyolefinic (co)polymer, which is preferably selected from the group consisting of chlorinated polypropylene, chlorinated polyethylene, chlorinated ethylene/vinyl acetate copolymer, and any combinations, mixtures or copolymers thereof.

Item 62 is a method according to any of the preceding items, wherein the second pressure sensitive adhesive layer comprises hollow non-porous particulate filler material, in particular expandable microspheres, glass microspheres and glass bubbles, wherein the surface of the hollow non-porous particulate filler material is provided with a hydrophobic or hydrophilic surface modification, preferably a hydrophobic surface modification.

Item 63 is a method according to any of the preceding items, wherein the second pressure sensitive adhesive layer comprises glass microspheres, the surface of which is provided with a hydrophobic or hydrophilic surface modification, preferably a hydrophobic surface modification.

Item 64 is a method according to any of the preceding items, wherein the second pressure sensitive adhesive layer comprises further filler material which is preferably selected from the group consisting of filler particles, in particular expanded perlite, silica type fillers, hydrophobic silica type fillers, hydrophilic silica type fillers, hydrophobic fumed silica, hydrophilic fumed silica, fibers, nanoparticles, in particular silica nanoparticles, and any combinations or mixtures thereof.

Item 65 is a method according to any of the preceding items, wherein the second pressure sensitive adhesive layer comprises a second pressure sensitive adhesive composition comprising:
a) from 50 to 99.5 weight percent, from 60 to 99 weight percent, or even from 70 to 99 weight percent, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate;
b) optionally, from 0.1 to 15 weight percent, from 0.5 to 15 weight percent, from 1.0 to 10 weight percent, from 2.0 to 8.0 weight percent, from 2.5 to 6.0 weight percent, or even from 3.0 to 6.0 weight percent of a polar monomer, preferably a polar acrylate; and
c) optionally, from 0.1 to 25 weight percent, from 0.5 to 20 weight percent, from 1 to 20 weight percent, from 5 to 20 weight percent, from 8 to 20 weight percent, from 10 to 20 weight percent, or even from 12 to 20 weight percent of a tackifying resin, preferably a hydrogenated hydrocarbon tackifier;
wherein the weight percentages are based on the total weight of polymerizable material.

Item 66 is a method according to any of the preceding items, wherein the multilayer pressure sensitive adhesive assembly has a peel strength value of more than 10 N/cm, more than 12 N/cm, more than 15 N/cm, more than 18 N/cm, more than 20 N/cm, more than 22 N/cm, more than 25 N/cm, or even more than more than 27 N/cm, when measured at 23°C according to the peel adhesion on oily contaminated aluminum surface test method described in the experimental section.

Item 67 is a method according to any of the preceding items, wherein the multilayer pressure sensitive adhesive assembly exhibits a decrease in peel strength of less than 60%, less than 55%, less than 50%, less than 45%, or even less than 40%, when measured according to the comparative peel adhesion test method described in the experimental section.

Item 68 is a method for adhesively bonding oily contaminated substrates, which comprises the steps of:
a) providing a first oily contaminated substrate;
b) providing a second oily contaminated substrate;
c) providing a multilayer pressure sensitive adhesive assembly as described in any of the preceding items;
d) adhering the first pressure sensitive adhesive polymeric layer to the first oily contaminated substrate; and
e) adhering the second oily contaminated substrate to the second pressure sensitive adhesive polymeric foam layer or the optional third pressure sensitive adhesive layer.

Item 69 is a method according to item 68, wherein the adhering step(s) are performed without using a pre-cleaning step of the substrates and/or without using an adhesion promoter, in particular a priming composition or a tie layer.

Item 70 is a method according to item 68 or 69, wherein the first substrate and/or the second substrate comprise a material selected from the group consisting of metals, in particular aluminum, steel, iron; glass; ceramic material; polymers, in particular polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); fiber-reinforced polymers; clear coat surfaces, in particular clear coats for vehicles like a car; and any combinations, mixtures or blends thereof.

Item 71 is a method according to any of items 68 to 70, wherein the first substrate and/or the second substrate comprise a material selected from the group consisting of polymers, in particular polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); fiber-reinforced polymers; clear coat surfaces, in particular clear coats for vehicles like a car; and any combinations, mixtures or blends thereof.

Item 72 is a method according to any of items 68 to 71, wherein the first substrate and/or the second substrate comprise a metal selected from the group consisting of aluminum, steel, iron, and any mixtures, combinations or alloys thereof.

Item 73 is a method according to item 72, wherein the first substrate and/or the second substrate comprise a metal selected from the group consisting of aluminum, steel, stainless steel and any mixtures, combinations or alloys thereof.

Item 74 is a method according to item 73, wherein the first substrate and/or the second substrate comprise aluminum.

Item 75 is a method according to any of items 68 to 74, wherein the first substrate and/or the second substrate comprise_an uneven surface which is in particular selected from the group of curved surfaces, bended surfaces, twisted surfaces, angled surfaces, arched surfaces, arced surfaces, and any combinations thereof.

Item 76 is a method according to any of items 68 to 75, wherein the first substrate and/or the second substrate comprise an uneven surface which is in particular provided with at least one structure selected from the group consisting of cavities, holes, apertures, orifices, pits, openings, gaps, troughs, edges, depressions, and any combinations thereof.

Item 77 is a composite assembly comprising:
a) an electronic control device comprising a housing body comprising a first part and a second part as described in any of items 1 to 12; and
b) a multilayer pressure sensitive adhesive assembly as described in any of the preceding items, wherein the first pressure sensitive adhesive polymeric layer is adhered to the first part of the housing body, and the second pressure sensitive adhesive polymeric foam layer is adhered to the second part of the housing body.

Item 78 is a composite assembly comprising:
a) an oily contaminated substrate; and
b) a multilayer pressure sensitive adhesive assembly as described in any of the preceding items, wherein the first pressure sensitive adhesive polymeric layer is adhered to the oily contaminated substrate.

Item 79 is a composite assembly according to item 78 comprising:
a) a first oily contaminated substrate;
b) a second oily contaminated substrate; and
c) a multilayer pressure sensitive adhesive assembly as described in any of the preceding items, wherein the first pressure sensitive adhesive polymeric layer is adhered to the first oily contaminated substrate, and the second pressure sensitive adhesive polymeric foam layer or the optional third pressure sensitive adhesive layer is adhered to the second oily contaminated substrate.

Item 80 is a composite assembly according to any of item 78 or 79, wherein the first substrate and/or the second substrate comprise a material selected from the group consisting of metals, in particular aluminum, steel, iron; glass; ceramic material; polymers, in particular polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); fiber-reinforced polymers; clear coat surfaces, in particular clear coats for vehicles like a car; and any combinations, mixtures or blends thereof.

Item 81 is a composite assembly according to any of items 78 to 80, wherein the first substrate and/or the second substrate comprise a material selected from the group consisting of polymers, in particular polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); fiber-reinforced polymers; clear coat surfaces, in particular clear coats for vehicles like a car; and any combinations, mixtures or blends thereof.

Item 82 is a composite assembly according to any of items 78 to 81, wherein the first substrate and/or the second substrate comprise a metal selected from the group consisting of aluminum, steel, iron, and any mixtures, combinations or alloys thereof.

Item 83 is a composite assembly according to item 82, wherein the first substrate and/or the second substrate comprise a metal selected from the group consisting of aluminum, steel, stainless steel and any mixtures, combinations or alloys thereof.

Item 84 is a composite assembly according to item 83, wherein the first substrate and/or the second substrate comprise aluminum.

Item 85 is a composite assembly according to any of items 78 to 84, wherein the first substrate and/or the second substrate comprise an uneven surface which is in particular selected from the group of curved surfaces, bended surfaces, twisted surfaces, angled surfaces, arched surfaces, arced surfaces, and any combinations thereof.

Item 86 is a composite assembly according to any of items 78 to 85, wherein the first substrate and/or the second substrate comprise an uneven surface which is in particular provided with at least one structure selected from the group consisting of cavities, holes, apertures, orifices, pits, openings, gaps, troughs, edges, depressions, and any combinations thereof.

Item 87 is the use of a multilayer pressure sensitive adhesive assembly as described in any of the preceding items for manufacturing an electronic control device comprising a housing body comprising a first part and a second part.

Item 88 is the use according to item 87, wherein the first part and the second part are as described in any of items 1 to 12.

Item 89 is the use according to any of item 87 or 88, wherein the electronic control device is as described in any of items 13 to 15.

Item 90 is the use of a multilayer pressure sensitive adhesive assembly as described in any of the preceding items for adhesively bonding to an oily contaminated surface.

Item 91 is the use according to item 90 for adhesively bonding oily contaminated substrates, in particular a first oily contaminated substrate to a second oily contaminated substrate.

### EXAMPLES

The present disclosure is further illustrated by the following examples. These examples are merely for illustrative purposes only and are not meant to be limiting on the scope of the appended claims.

### Test Methods applied:

### 90°-Peel-test at 300 mm/min (according to Test Method, Finat No. 2, 8^{th} edition 2009)

Multilayer pressure sensitive adhesive assembly strips according to the present disclosure and having a width of 12.7 mm and a length > 120 mm are cut out in the machine direction from the sample material. For test sample preparation the liner is first removed from the one adhesive side and placed on an aluminum strip having the following dimension 22 x 1.6 cm, 0.13 mm thickness. Then, the adhesive coated side of each PSA assembly strip is placed, after the liner is removed, with its adhesive side down on a clean test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the pressure sensitive adhesive assembly strips to the test panel, the test samples are allowed to dwell at ambient room temperature (23°C +/- 2°C, 50% relative humidity +/-5%) for 72 hours prior to testing. For peel testing the test samples are in a first step clamped in the lower movable jaw of a Zwick tensile tester (Model Z005 commercially available from Zwick/Roell GmbH, Ulm, Germany). The multilayer pressure sensitive adhesive film strips are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 10 mm (N/10 mm). The quoted peel values are the average of two 90°-peel measurements.

### 90°-Peel-test after heat ageing

First, the samples are prepared as previously described with an aluminum backing and applied onto the test substrates. After storage of the samples in a constant climate room for 1 hour at room temperature (at 23 +/- 2 °C and 50% relative humidity +/-5%), the test panels are placed in an oven at 90°C for 3 days. After oven aging, the test panels are reconditioned in a constant climate room for 24 hours and the 90° peel forces are measured as described above.

### 90°-Peel-test on oily contaminated surface

The samples are prepared as described previously in the general peel test procedure, at the exception that the test panels are previously coated with the testing oil (3g/m²). The test samples are allowed to dwell at ambient room temperature (23°C +/- 2°C, 50% relative humidity +/-5%) for 72 hours prior to testing and the 90° peel forces are measured as described above.

### Comparative 90°-Peel-test

The samples are prepared as described previously, and the decrease in peel strength (in percentage) is determined when comparing peel strength measured on clean panels and peel strength measured on panels coated with the testing oil.

### Molecular Weight measurement

The weight average molecular weight of the polymers is determined using conventional gel permeation chromatography (GPC). The GPC apparatus obtained from Waters, include a high-pressure liquid chromatography pump (Model 600E), an auto-sampler (Model 712 WISP), and a refractive index detector (Model 2414). The chromatograph is equipped with three Mixed Bed type B (10µm particle) columns 300 x 7.5 mm from Agilent.

Polymeric solutions for testing are prepared by dissolving a polymer in 1ml tetrahydrofuran at a concentration of 0.3% polymer by weight. 300 µl etheral alcoholic diazomethane solution (0.4 mol/1) is added and the sample is kept for 60 minutes at room temperature. The sample is then blown to dryness under a stream of nitrogen at room temperature. The dried sample is dissolved in THF, containing 0.1% toluene, to yield a 0.1% w/v solution. The solution is then filtered through a 0.45 micron polytetrafluoroethylene filter. 100 µl of the resulting solution is injected into the GPC and eluted at a rate of 1.00 milliliter per minute through the columns maintained at 40°C. Toluene is used as a flow rate marker. The system is calibrated with polystyrene standards (10 standards, divided in 3 solutions in the range between 470 Da and 7300000 Da) using a 3rd order regression analysis to establish a calibration curve. The weight average molecular weight (Mw) is calculated for each sample from the calibration curve.

### Test Substrates used for testing:

The pressure sensitive adhesive compositions and assemblies according to the present disclosure are tested for their adhesive properties on following substrates:
- Steel: Stainless Steel (SS) plate ("Edelstahl 1.4301 IIID", 150 mm x 50 mm x 2 mm), available from Rocholl GmbH, Aglatershausen, Germany. Prior to testing, the substrates are first cleaned with MEK, dried with a tissue, then cleaned again with MEK and dried with a tissue.
- PP: polypropylene plate (150 mm x 50 mm x 2 mm) with protective film, available from Aquarius Plastics Ltd, UK. The PP test panels with protective film require no cleaning prior to testing. The only step required consists in removing the protective film before adhesive application
- PA 66: polyamide plate (150 mm x 25 mm x 2 mm), available from Rocholl GmbH, Aglatershausen, Germany. Prior to testing, the substrates are cleaned with a 50/50 isopropanol/water mixture.

### Raw materials and products used:

In the examples, the following raw materials and commercial adhesive tapes used are used:
**2-Ethylhexylacrylate** (2-EHA, C8-acrylate) is an ester of 2-ethylalcohol and acrylic acid which is obtained from BASF AG, Germany.
**Acrylic acid** (AA) is obtained from BASF AG, Germany.
**Isobornylacrylate** (SR 506D) is a monofunctional acrylic monomer available from Cray Valley, France.
**Isooctyl thioglycolate** (IOTG) is a chain transfer agent and commercially available by Bruno Bock Chemische Fabrik, Germany.
**Omnirad BDK** (2,2-dimethoxy-2-phenylacetophenone) is a UV-initiator and is available from iGm resins, Waalwijk Netherlands.
**1,6-Hexanedioldiacrylate** (HDDA) is a fast curing diacrylate and is obtained from BASF AG, Germany.
**HTGO** is a high Tg acrylic oligomer having a M_{w} of 25.000 g/mol, used as 50wt% dilution in 2-PHA) and prepared according to the procedure described in EP-A1-2803712 (Wieneke et al.) for the copolymer referred to as HTG-1d.
**Regalrez 1126** is a low molecular weight, fully hydrogenated pure monomer C9 resin, commercially available from Eastman Chemical BV, NL.
**3M Glass Bubbles (sK15),** silane-treated hollow glass bubbles with a diameter of 115 micrometers, commercially available by 3M Deutschland GmbH, Germany.
**Aerosil R-972** are hydrophobic fumed silica particles, available from Evonik, Germany.
**CPO 343-1** is a chlorinated polyolefin soluble in isobornylacrylate, commercially available from Eastman Chemical Products Inc., U.S.A.
**Anticorit RP 4107** S is a corrosion protection oil, commercially available from Fuchs Lubricants, Belgium.
**ACX plus 7812** is an acrylic foam tape, commercially available from Tesa SE, Germany.
**SilverTape 5351** is an acrylic foam tape, commercially available from AFTC BV, The Netherlands.

### Preparation of the precursors of the second pressure sensitive adhesive polymeric foam layers (foam layers):

The precursors of the second pressure sensitive adhesive compositions and the corresponding second pressure sensitive adhesive polymeric foam layers (foam layers), hereinafter referred to as FL 1-2, are prepared by combining the C8 acrylate (2-EHA) and the acrylic acid (between 5 and 10 wt%) with 0.04 pph of Omnirad as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity comprised between 2000 and 4500 mPas is reached (when measured with a Brookfield viscosimeter, T = 23°C, spindle 4, 12 rpm). Additionally, the remaining amount of Omnirad BDK, the HDDA crosslinker, the glass bubbles and the fumed silica particles are added to the composition and mixed until they have dissolved / dispersed. The exact formulations of the polymerization precursor compositions for second sensitive adhesive polymeric layers FL 1-2 are listed (in pph) in Table 1 below.

**Table 1**

| | 2-EHA | AA | HDDA | Omnirad BDK | Aerosil | GB sK15 |
|---|---|---|---|---|---|---|
| FL 1 | 90 | 10 | 0.1 | 0.2 | 3 | 10 |
| FL 2 | 95 | 5 | 0.1 | 0.2 | 3 | 10 |

### Preparation of the precursors of the second pressure sensitive adhesive layers SL 1-2 (skin layers):

The precursors of the first pressure sensitive adhesive layers (skin layers), hereinafter referred to as SL 1-2, are prepared by combining the C8 acrylate (2-EHA) and the acrylic acid with 0.04 pph of Omnirad as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity comprised between 2000 and 4500 mPas is reached (when measured with a Brookfield viscosimeter, T = 25 °C, spindle 4, 12 rpm). Additionally, the remaining amount of Omnirad BDK, the HDDA crosslinker, the monomeric IBOA, the monomeric IBOA/CPO mixture, the HTGO oligomer and the hydrocarbon tackifier are added to the composition and mixed until they have dissolved/dispersed. The HTGO is added as a dilution in 2-EHA. The exact formulation of the polymerization precursor compositions for the second pressure sensitive adhesive layers SL 1-2 are listed (in pph) in Table 2 below.

**Table 2**

| | 2-EHA | AA | IBOA | IBOA/CPO (10/2) | HTGO | Omnirad BDK | HDDA | Regalrez 1126 |
|---|---|---|---|---|---|---|---|---|
| SL 1 | 76.5 | 2.5 | 10 | - | 10 | 0.2 | 0.1 | 10 |
| SL 2 | 76.5 | 2.5 | - | 12 | 10 | 0.2 | 0.1 | 10 |

### Preparation of the multilayer pressure sensitive adhesive assemblies for Ex.1 to Ex.4

The precursors of the pressure sensitive adhesive layer skins SL 1-2 and of the second pressure sensitive adhesive polymeric foam core layers FL 1-2, are superimposed onto each other in a coater, according to the method described in WO-A1-2011094385 (Hitschmann et al.). Hereby, the liquid precursors of the pressure sensitive adhesive skin layers SL 1-2 are coated on the bottom of the pressure sensitive adhesive polymeric foam core layers FL 1-2. The knife height setting is 130-140 micrometers for the first knife (for the pressure sensitive adhesive skin layers LS 1-8) and 1240-1250 micrometers for the second knife (for the polymeric foam core layer FL 1), both levels calculated from the substrate surface. Curing is accomplished from both top and bottom side in a UV-curing station with a length of 300 cm at the line speed set to 0.82 m/min. The total radiation intensity irradiated cumulatively from top and bottom is approximately 3 mW/cm².

### Examples used for testing

The tested examples are listed in Table 3 below.

**Table 3**

| Example No. | Polymeric foam layer used | Skin layer used |
|---|---|---|
| Ex.1 | LF 1 | LS 1 |
| Ex.2 | LF 2 | LS 1 |
| Ex.3 | LF 1 | LS 2 |
| Ex.4 | LF 2 | LS 2 |

### Test Results

### 90°Peel on various substrates (72h, room temperature)

Table 4 shows the 90° peel values of the multilayer pressure sensitive adhesive assemblies according to Ex.1 to Ex.4 and two comparative acrylic foam tapes after 72h dwell time at room temperature (RT) to various test substrates.

**Table 4**

| Example No. | Peel value on SS (N/cm) | Peel value on PA 66 (N/cm) | Peel value on PP (N/cm) |
|---|---|---|---|
| Ex.1 | 36 | 24 | 18 |
| Ex.2 | 60 | 32 | 47 |
| Ex.3 | 63 | 27 | 19 |
| Ex.4 | 58 | 59 | 58 |
| ACX 7812 | 37 | 25 | 7 |
| AFTC SL 5351 | 33 | 18 | 3.5 |

Table 4 shows the consistently excellent peel adhesion performance obtained with multilayer pressure sensitive adhesive assemblies according to the disclosure (Ex. 1 to Ex.4) on various types of substrate, when compared to comparative commercially available multilayer pressure sensitive adhesive assemblies.

### 90°Peel on oily contaminated stainless-steel test plates (72h, room temperature)

Table 5 shows the 90° peel values of the multilayer pressure sensitive adhesive assemblies according to Ex.1 to Ex.4 and two comparative acrylic foam tapes after 72h dwell time at room temperature (RT) to oily contaminated stainless-steel plates. The oily contaminated stainless-steel plates are prepared as described in the corresponding test method.

**Table 5**

| Example No. | Peel value on SS (N/cm) | Peel value on oily contaminated SS plates (N/cm) | Decrease in peel strength (%) |
|---|---|---|---|
| Ex.1 | 36 | 20 | 44 |
| Ex.2 | 60 | 30 | 50 |
| Ex.3 | 63 | 24 | 62 |
| Ex.4 | 58 | 28 | 52 |
| ACX 7812 | 37 | 15 | 59 |
| AFTC SL 5351 | 33 | 9 | 73 |

Table 5 shows the overall outstanding peel strength performance obtained with multilayer pressure sensitive adhesive assemblies according to the disclosure (Ex.1 to Ex.4) on oily contaminated stainless-steel plates, when compared to comparative commercially available multilayer pressure sensitive adhesive assemblies.

## Claims

1. A method of manufacturing an electronic control device comprising a housing body comprising a first part and a second part, wherein the method comprises the steps of:
1) providing a housing body comprising a first part and a second part;
2) providing a multilayer pressure sensitive adhesive assembly comprising a first pressure sensitive adhesive polymeric layer having a first pressure sensitive adhesive composition adjacent to a second pressure sensitive adhesive polymeric foam layer having a second pressure sensitive adhesive composition; wherein the second pressure sensitive adhesive composition comprises:
a) a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof; and
b) optionally, a hollow non-porous particulate filler material;
3) adhering the first pressure sensitive adhesive polymeric layer to the first part; and
4) adhering the second part to the second pressure sensitive adhesive polymeric foam layer.

2. A method according to claim 1, wherein the first part and/or the second part comprise a material selected from the group consisting of metals, in particular aluminum, steel, iron; glass; ceramic material; polymers, in particular polyolefins; in particular polypropylene (PP), polyethylene (PE), high density polyethylene (HDPE); blends of polypropylene, in particular polypropylene/ ethylene propylene diene rubber (EPDM), thermoplastic polyolefins (TPO); thermoplastic elastomers (TPE); polyamides (PA), in particular polyamide 6 (PA6); acrylonitrile butadiene styrene (ABS); polycarbonates (PC); PC/ABS blends; polyvinylchlorides (PVC); polyurethanes (PU); polyacetals, in particular polyoxymethylene (POM); polystyrenes (PS); polyacrylates, in particular poly(methyl methacrylate) (PMMA); polyesters, in particular polyethylene terephthalate (PET); fiber-reinforced polymers; clear coat surfaces, in particular clear coats for vehicles like a car; and any combinations, mixtures or blends thereof.

3. A method according to any of claim 1 or 2, wherein the first part and/or the second part comprise an uneven surface which is in particular selected from the group of curved surfaces, bended surfaces, twisted surfaces, angled surfaces, arched surfaces, arced surfaces, and any combinations thereof.

4. A method according to any of the preceding claims, wherein the cover part and/or the base part comprise a surface which is at least partly oily contaminated.

5. A method according to any of the preceding claims, wherein the electronic control device is selected from the group consisting of electronic control units, in particular automotive vehicle electronic control units.

6. A method according to any of the preceding claims, wherein the first pressure sensitive adhesive composition comprises a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

7. A method according to any of the preceding claims, wherein the first pressure sensitive adhesive composition comprises:
a) 60 parts by weight or greater of a low Tg (meth)acrylate copolymer comprising:
i. C₁-C₃₂(meth)acrylic acid ester monomer units;
ii. optionally, acid functional ethylenically unsaturated monomer units;
iii. optionally, non-acid functional, ethylenically unsaturated polar monomer units;
iv. optionally, vinyl monomer units; and
v. optionally, multifunctional (meth)acrylate monomer units, and
b) up to 40 parts by weight of a high Tg (meth)acrylate copolymer having a weight average molecular weight (Mw) of above 20,000 Daltons, and comprising:
i. high Tg (meth)acrylic acid ester monomer units;
ii. optionally, acid functional ethylenically unsaturated monomer units;
iii. optionally, low Tg (meth)acrylic acid ester monomer units;
iv. optionally, non-acid functional, ethylenically unsaturated polar monomer units;
v. optionally, vinyl monomer units;
vi. optionally, a chlorinated polyolefinic (co)polymer; and
c) optionally, up to 20 parts by weight of a hydrocarbon tackifying resin, in particular a hydrogenated hydrocarbon tackifying resin, based on 100 parts by weight of copolymers a) and b).

8. A method according to any of preceding claims, wherein the low Tg (meth)acrylate copolymer comprises:
i. from 60 to 99.5 parts by weight, from 65 to 99.5 parts by weight, from 65 to 99.5 parts by weight, from 70 to 99.5 parts by weight, from 75 to 99.5 parts by weight, from 80 to 99.5 parts by weight, from 85 to 99.5 parts by weight, or even from 85 to 98.5 parts by weight of C₁-C₃₂ (meth)acrylic acid ester monomer units, C₁-C₂₄ (meth)acrylic acid ester monomer units, or even C₁-C₁₈ (meth)acrylic acid ester monomer units;
ii. from 0.5 to 15 parts by weight of acid-functional ethylenically unsaturated monomer units;
iii. from 0 to 10 parts by weight of non-acid functional, ethylenically unsaturated polar monomer units;
iv. from 0 to 5 parts vinyl monomer units; and
v. from 0 to 5 parts of multifunctional (meth)acrylate monomer units;
based on 100 parts by weight of the total monomers of the low Tg copolymer.

9. A multilayer pressure sensitive adhesive assembly according to any of preceding claims, wherein the high Tg (meth)acrylate copolymer comprises:
i. up to 100 parts by weight of high Tg (meth)acrylic acid ester monomer units;
ii. from 0 to 15, or even from 1 to 5 parts by weight of acid functional ethylenically unsaturated monomer units;
iii. from 0 to 50, or even from 1 to 25 parts by weight of optional low Tg (meth)acrylic acid ester monomer units;
iv. from 0 to 10, or even from 1 to 5 parts by weight of optional further non-acid functional, ethylenically unsaturated polar monomer units; and
v. from 0 to 5, or even from 1 to 5 parts by weight of optional vinyl monomer units;
based on 100 parts by weight of the total monomers of the high Tg (meth)acrylate copolymer.

10. A multilayer pressure sensitive adhesive assembly according to any of preceding claims, wherein the high Tg (meth)acrylic acid ester monomer units are selected from the group consisting of t-butyl (meth)acrylate, methyl (meth)acrylate, ethyl (meth)acrylate, isopropyl (meth)acrylate, n-butyl (meth)acrylate, isobutyl (meth)acrylate, s-butyl (meth)acrylate, t-butyl (meth)acrylate, stearyl (meth)acrylate, phenyl (meth)acrylate, cyclohexyl (meth)acrylate, isobornyl (meth)acrylate, benzyl (meth)acrylate, 3,3,5 trimethylcyclohexyl (meth)acrylate, cyclohexyl (meth)acrylate, N-octyl acrylamide, propyl (meth)acrylate, and any mixtures thereof.

11. A multilayer pressure sensitive adhesive assembly according to any of preceding claims, wherein the low Tg (meth)acrylic acid ester monomer units are selected from the group consisting of n-butyl acrylate, isobutyl acrylate, hexyl acrylate, 2-ethylhexylacrylate, isooctylacrylate, caprolactoneacrylate, isodecylacrylate, tridecylacrylate, laurylmethacrylate, methoxy-polyethylenglycol-monomethacrylate, laurylacrylate, tetrahydrofurfuryl-acrylate, ethoxy-ethoxyethyl acrylate, ethoxylated-nonylacrylate, and any mixtures thereof.

12. A method according to any of the preceding claims, wherein the second pressure sensitive adhesive layer comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

13. A method according to any of the preceding claims, wherein the second pressure sensitive adhesive layer comprises a second pressure sensitive adhesive composition comprising:
a) from 50 to 99.5 weight percent, from 60 to 99 weight percent, or even from 70 to 99 weight percent, of a linear or branched alkyl (meth)acrylate ester as first/main monomer, wherein the main monomer is preferably selected from the group consisting of iso-octyl (meth)acrylate, 2-ethylhexyl (meth)acrylate, 2-propylheptyl (meth)acrylate; optionally
b) from 0.1 to 15 weight percent, from 0.5 to 15 weight percent, from 1.0 to 10 weight percent, from 2.0 to 8.0 weight percent, from 2.5 to 6.0 weight percent, or even from 3.0 to 6.0 weight percent of a polar monomer, preferably a polar acrylate; and optionally
c) from 0.1 to 25 weight percent, from 0.5 to 20 weight percent, from 1 to 20 weight percent, from 5 to 20 weight percent, from 8 to 20 weight percent, from 10 to 20 weight percent, or even from 12 to 20 weight percent of a tackifying resin, preferably a hydrogenated hydrocarbon tackifier;
wherein the weight percentages are based on the total weight of polymerizable material.

14. A composite assembly comprising:
a) an electronic control device comprising a housing body comprising a first part and a second part as described in any of the preceding claims; and
b) a multilayer pressure sensitive adhesive assembly as described in any of the preceding claims, wherein the first pressure sensitive adhesive polymeric layer is adhered to the first part of the housing body, and the second pressure sensitive adhesive polymeric foam layer is adhered to the second part of the housing body.

15. Use of a multilayer pressure sensitive adhesive assembly as described in any of claims 1 to 13 for manufacturing an electronic control device comprising a housing body comprising a first part and a second part.
